# EUROPEAN PATENT APPLICATION

(11) **EP 4 606 276 A1**
(43) Date of publication of application: **27.08.2025**
(21) Application number: 23879611.4
(22) Date of filing: 03.10.2023
(51) Int. Cl.: A47J 27/00, G06Q 50/10, H04M 11/00

(54) **CONTROL METHOD, INFORMATION PROVIDING METHOD, CONTROL SYSTEM, INFORMATION PROVIDING SYSTEM, AND PROGRAM**

(30) Priority: 21.10.2022 JP 2022169117
(71) Applicant: Panasonic Intellectual Property Management Co., Ltd., Kadoma-shi, Osaka 571-0057 (JP)
(72) Inventor: YAMAJI, Satoru, Kadoma-shi, Osaka 571-0057 (JP); TSUJI, Kiyotaka, Kadoma-shi, Osaka 571-0057 (JP); KONDO, Kenji, Kadoma-shi, Osaka 571-0057 (JP); OKUMURA, Yasuaki, Kadoma-shi, Osaka 571-0057 (JP)
(74) Representative: Grünecker Patent- und Rechtsanwälte PartG mbB
(86) International application number: PCT/JP2023/036101
(87) International publication number: WO 2024/084964

(57) **Abstract**

A control method including acquiring target sensory information (step S110), acquiring initial cooking parameter information used for cooking performed by a cooker on the basis of the acquired target sensory information (step S120), acquiring sensory information during cooking of a cooking object during cooking performed by the cooker (step S150), changing the initial cooking parameter information to modified cooking parameter information including one or more modified cooking parameters on the basis of the target sensory information and the sensory information during cooking (step S180), and outputting control information including the modified cooking parameter information (step S190).

## Description

### Technical Field

The present disclosure relates to a control method concerning cooking, an information providing method concerning cooking, and others.

### Background Art

Conventionally, a cooking method that increases convenience of cooking has been proposed as a control method concerning cooking (see, for example, Patent Literature 1). According to this cooking method, increase/decrease information indicative of increase/decrease of cooking ingredients is acquired from a cooking appliance, the increase/decrease information is converted into a calorific value, and a heating period of the cooking appliance is adjusted according to the calorific value. For example, the increase/decrease information is acquired by imaging using a camera. This can omit user's trouble of adjusting a heating period in accordance with increase/decrease of cooking ingredients.

A cooking assistance system for assisting cooking has been proposed (see, for example, Patent Literature 2). This cooking assistance system is provided as smart glasses. The smart glasses specify a size of an ingredient piece which a cook generates by cutting an ingredient, estimate a heating cooking period optimum for the ingredient piece from the size of the ingredient piece, and display the heating cooking period. That is, a control method concerning cooking using the smart glasses includes specifying a size of an ingredient piece and estimating a heating cooking period. This allows a cook to easily perform cooking by using the heating cooking period suitable for the size of the ingredient piece obtained by cutting even if the cook cuts an ingredient into a size different from a size written in a recipe.

### Citation List

### Patent Literature

PTL 1: Japanese Unexamined Patent Application Publication No. 2020-159581
PTL 2: Japanese Patent No. 6692960

### Summary of Invention

However, the controls methods of Patent Literatures described above have a problem that a sensory level such as a savoriness level of a dish obtained by cooking cannot be properly controlled.

The present disclosure provides a control method and others that can properly control a sensory level of a dish.

A control method according to an aspect of the present disclosure is a control method performed by a computer to control a cooker that cooks a cooking object, and the control method includes acquiring target sensory information indicative of a target of one or more numerical values concerning sensory characteristics of a dish to be obtained by cooking of the cooking object; acquiring cooking parameter information including one or more cooking parameters used for the cooking performed by the cooker on the basis of the acquired target sensory information; acquiring sensory information during cooking indicative of one or more numerical values concerning the sensory characteristics of the cooking object during the cooking performed by the cooker; changing the cooking parameter information to modified cooking parameter information including one or more modified cooking parameters on the basis of the target sensory information and the sensory information during cooking; and outputting a control signal including the modified cooking parameter information.

It should be noted that the general or specific aspect may be implemented as a device, a system, an integrated circuit, a computer-readable recording medium, or any selective combination thereof. Examples of the computer-readable recording medium include a non-volatile recording medium such as a compact disc-read only memory (CD-ROM). The computer-readable recording medium may be a non-transitory recording medium.

According to the present disclosure, a sensory level of a dish can be properly controlled.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

[Fig. 1] Fig. 1 is a diagram illustrating an example of a configuration of an information processing system according to an embodiment.
[Fig. 2] Fig. 2 is a block diagram illustrating an example of functional configurations of an operation terminal and a cooker according to the embodiment.
[Fig. 3] Fig. 3 is a block diagram illustrating an example of a functional configuration of a server according to the embodiment.
[Fig. 4] Fig. 4 illustrates details of kinds of sensory information stored in a third storage unit according to the embodiment.
[Fig. 5] Fig. 5 is a block diagram illustrating an example of a detailed functional configuration of a server control unit according to the embodiment.
[Fig. 6] Fig. 6 illustrates an example of dish list information, recipe information, basic cooking parameter information, and basic sensory information according to the embodiment.
[Fig. 7] Fig. 7 illustrates an example of image data, chemical analysis data, and weight data included in cooking state information according to the embodiment.
[Fig. 8] Fig. 8 illustrates an example of a screen displayed on the operation terminal according to the embodiment.
[Fig. 9] Fig. 9 illustrating another example of a screen displayed on the operation terminal according to the embodiment.
[Fig. 10] Fig. 10 is a sequence diagram illustrating an example of processing operation of the information processing system according to the embodiment.
[Fig. 11] Fig. 11 is a flowchart illustrating an example of processing operation of the server according to the embodiment.
[Fig. 12] Fig. 12 is a flowchart illustrating details of part of the processing operation of the server according to the embodiment.
[Fig. 13] Fig. 13 is a flowchart illustrating an example of construction of a first learning model according to the embodiment.
[Fig. 14] Fig. 14 is a flowchart illustrating an example of construction of a second learning model according to the embodiment.
[Fig. 15] Fig. 15 is a flowchart illustrating an example of construction of a third learning model according to the embodiment.
[Fig. 16] Fig. 16 is a flowchart illustrating an example of construction of a fourth learning model according to the embodiment.
[Fig. 17] Fig. 17 illustrates an example of the first learning model.
[Fig. 18] Fig. 18 illustrates an example of the second learning model.
[Fig. 19] Fig. 19 illustrates an example of the third learning model.
[Fig. 20] Fig. 20 illustrates an example of the fourth learning model.

### Description of Embodiments

### (Underlying Knowledge Forming Basis of the Present Disclosure)

A cook gives consideration to a sensory level such as a savoriness level of a dish which the cook cooks. The dish is, for example, bouillon, braised pork belly, or the like. The sensory level is a level of a stimulus applied to a sensory organ such as a human nose or tongue, and may be, for example, a level of savoriness, sweet scent, sour taste, bitter taste, salty taste, or the like. Taste and flavor are expressed by these sensory levels.

To perform cooking, a cooking object including one or more ingredients is prepared in accordance with a recipe of a dish to be cooked. The dish having a sensory level according to the recipe can be made by cooking the cooking object.

However, a cook sometimes desires a sensory level different from a sensory level written in the recipe. Even if the cook desires the sensory level written in the recipe, it is sometimes impossible to prepare accurate amounts of ingredients written in the recipe or to prepare ingredients in a ratio written in the recipe or the sensory level may change in a cooking process even if the ingredients are prepared in the ratio written in the recipe. In such a case, it is difficult to properly set a temperature, a pressure, a period, and the like of a cooker for cooking a cooking object in accordance with cook's desire.

In view of this, a control method according to a first aspect of the present disclosure is a control method performed by a computer to control a cooker that cooks a cooking object, and the control method includes acquiring target sensory information indicative of a target of one or more numerical values concerning sensory characteristics of a dish to be obtained by cooking of the cooking object; acquiring cooking parameter information including one or more cooking parameters used for the cooking performed by the cooker on the basis of the acquired target sensory information; acquiring sensory information during cooking indicative of one or more numerical values concerning the sensory characteristics of the cooking object during the cooking performed by the cooker; changing the cooking parameter information to modified cooking parameter information including one or more modified cooking parameters on the basis of the target sensory information and the sensory information during cooking; and outputting a control signal including the modified cooking parameter information. Note that each of the one or more numerical values concerning sensory characteristics is also called a sensory level or a sensory evaluation value and may be, for example, a savoriness level, a sweet scent level, a sour taste level, a bitter taste level, a salty taste level, or the like.

With this arrangement, target sensory information which, for example, a cook desires is acquired, and cooking parameter information is acquired, for example, as initial cooking parameter information on the basis of the target sensory information. Then, for example, upon transmission of the cooking parameter information to a cooker, cooking based on the cooking parameter information is started by the cooker. Then, the cooking parameter information used by the cooker is changed on the basis of one or more numerical values (i.e., sensory level) concerning sensory characteristics of a cooking object during cooking. Accordingly, by cooking based on the modified cooking parameter information, a sensory level of a dish to be finally obtained can be brought close to a sensory level indicated by the target sensory information. In other words, a sensory level or the like of the dish to be finally obtained can be brought close to a sensory level which the cook desires. That is, even in a case where the sensory level which the cook desires is different from a sensory level written in a recipe regarded as a base or even in a case where an amount of the cooking object is not identical to that written in the recipe, a final sensory level of the dish can be brought close to the sensory level which the cook desires. As a result, the sensory level of the dish can be properly controlled without cook's trouble of adjusting a cooking parameter.

**In** a control method according to a second aspect that depends from the first aspect, the acquiring the sensory information during cooking may include acquiring, as first sensory information, the sensory information during cooking at a time after elapse of a first period from start of the cooking performed by the cooker and acquiring, as second sensory information, the sensory information during cooking at a time after elapse of a second period from the start of the cooking performed by the cooker, the time after elapse of the second period being later than the time after elapse of the first period, and the changing the cooking parameter information may include changing the cooking parameter information to the modified cooking parameter information on the basis of a difference between the first sensory information and the second sensory information and the target sensory information.

With this arrangement, the cooking parameter information is changed to the modified cooking parameter information on the basis of a change amount of the sensory information during cooking and the target sensory information. Therefore, the final sensory level of the dish can be effectively brought close to the sensory level which the cook desires by taking into consideration tendency of change of the sensory level caused by cooking based on the cooking parameter information. Note that the first period may be 0. In this case, the first sensory information indicates one or more numerical values concerning sensory characteristics of the cooking object at the start of cooking.

A control method according to a third aspect that depends from the first aspect or the second aspect may further include acquiring third sensory information indicative of one or more numerical values concerning the sensory characteristics of the dish to be obtained by cooking performed in accordance with the modified cooking parameter information by the cooker.

With this arrangement, information indicative of a sensory level of the dish to be finally obtained is estimated as the third sensory information. Therefore, for example, when the third sensory information is presented to the cook, the cook can check whether or not a dish having a sensory level which the cook desires is made or how close the sensory level of the dish to be finally obtained is to cook's desire.

In a control method according to a fourth aspect that depends from any one of the first to third aspects, the changing the cooking parameter information may include acquiring candidates for the modified cooking parameter information on the basis of the target sensory information and the sensory information during cooking and selecting, as the modified cooking parameter information, a candidate whose difference from the cooking parameter information is less than or equal to a threshold value or a candidate closest to the cooking parameter information from among the candidates.

With this arrangement, for example, even in a case where new pieces of cooking parameter information are output as candidates upon input of the target sensory information and the sensory information during cooking to the learning model, a candidate that is not markedly different from the original cooking parameter information (i.e., the initial cooking parameter information) is employed as the modified cooking parameter information. It is therefore possible to lessen a processing burden of the cooker caused by the change of the cooking parameter information.

In a control method according to a fifth aspect that depends from the third aspect, the acquiring the third sensory information may include acquiring the third sensory information by inputting at least the modified cooking parameter information to a learning model, and the learning model may have been trained by machine learning to output one or more numerical values concerning the sensory characteristics of the dish to be obtained by cooking performed by the cooker in accordance with one or more cooking parameters changed during cooking performed by the cooker in response to input of at least the changed one or more cooking parameters.

With this arrangement, the learning model is used to acquire the third sensory information, and it is therefore possible to acquire accurate third sensory information.

In a control method according to a sixth aspect that depends from any one of the first to fifth aspects, the acquiring the sensory information during cooking may include acquiring the sensory information during cooking by inputting, to a learning model, at least one of an image of the cooking object, a weight of the cooking object, and an amount of a chemical component contained in the cooking object during the cooking performed by the cooker.

With this arrangement, the learning model is used to acquire the sensory information during cooking, and it is therefore possible to acquire accurate sensory information during cooking.

In a control method according to a seventh aspect that depends from the sixth aspect, the learning model may have been trained by machine learning to output one or more numerical values concerning the sensory characteristics of one or more cooking ingredients that are being cooked by the cooker in response to input of at least one of an image of the one or more cooking ingredients, a weight of the one or more cooking ingredients, and an amount of a chemical component contained in the one or more cooking ingredients.

With this arrangement, when at least one of the image of the cooking object, the weight of the cooking object, and the amount of the chemical component contained in the cooking object is input to the learning model that has been trained by machine learning, accurate sensory information during cooking can be acquired from the learning model.

In a control method according to an eighth aspect that depends from any one of the first to seventh aspects, the one or more cooking parameters may include a parameter indicative of a temperature used for the cooking performed by the cooker and a parameter indicative of a period used for the cooking performed by the cooker.

With this arrangement, it is possible to properly control sensory characteristics of a dish that is obtained, for example, by grilling.

In a control method according to a ninth aspect that depends from the eighth aspect, the one or more cooking parameters may further include a parameter indicative of a pressure used for the cooking performed by the cooker.

With this arrangement, it is possible to properly control sensory characteristics of a dish that is obtained, for example, by steaming, boiling, or the like under pressure.

An information providing method according to an aspect of the present disclosure is an information providing method for causing a computer to provide information concerning cooking of a cooking object performed by a cooker, and the information providing method includes receiving target sensory information indicative of a target of one or more numerical values concerning sensory characteristics of a dish to be obtained by the cooking of the cooking object in response to user's operation; and outputting final sensory information concerning the sensory characteristics of the dish, which is derived on the basis of the target sensory information and sensory information during cooking indicative of one or more numerical values concerning the sensory characteristics of the cooking object during the cooking of the cooking object performed by the cooker.

With this arrangement, for example, when dish information indicative of a dish which a cook, who is a user of the computer, desires and target sensory information which the cook desires are received, sensory characteristics (i.e., sensory level) of a dish to be finally obtained can be presented to the cook in accordance with these pieces of information. The presented sensory characteristics of the dish may be presented as a numerical value, may be presented as a radar chart, or may be presented as the number of stars. Therefore, the cook can properly grasp sensory characteristics of the dish to be obtained by cooking. That is, the cook can check whether or not a dish having a sensory level which the cook desires is made or how close a sensory level of a dish to be finally obtained is to cook's desire.

Note that the processing operation included in the control method and the information providing method is performed by a computer.

An embodiment of the present disclosure is described below with reference to the drawings. The embodiment described below is a specific example of the present disclosure. Numerical values, shapes, materials, constituent elements, the way in which the constituent elements are disposed and connected, and the like illustrated in the embodiment below are examples and do not limit the present disclosure. Among constituent elements in the embodiment below, constituent elements that are not described in independent claims indicating highest concepts are described as optional constituent elements.

Note that each drawing is a schematic view and is not necessarily strict illustration. In the drawings, substantially identical constituent elements are given identical reference signs, and repeated description thereof is omitted or simplified. The effects of the control method and the information providing method are also similarly realized by a system and a program.

### (Embodiment 1)

### [Overall Configuration of Information Processing System]

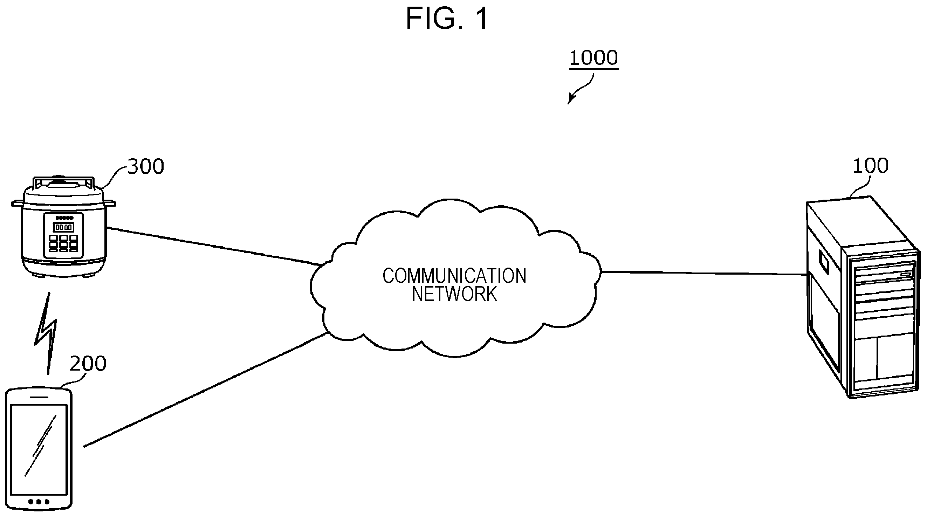

Fig. 1 is a diagram illustrating an example of a configuration of an information processing system 1000 according to the present embodiment.

The information processing system 1000 includes a server 100, an operation terminal 200, and a cooker 300 that are connected to one another over a communication network such as the Internet.

The cooker 300 is a device for making a dish by cooking a cooking object including one or more ingredients, and cooks the cooking object by adjusting a pressure, a temperature, and a period as cooking parameters. In the present embodiment, the cooker 300 is a pressure cooker as an example.

Note that the number of cooking parameters that can be adjusted by the cooker 300 is not limited to three, and may be one or two or may be four or more. The cooker 300 may be a device for stewing or steaming a cooking object, may be an IH (Induction Heating) cooker, or may be a temperature adjustable container. The temperature adjustable container performs fermentation and ripening of soy sauce, miso, or the like as cooking by controlling a temperature and a period.

The cooker 300 may be a cooker using a liquid or a gas slightly before a critical point (a point where a temperature is 374°C and a pressure is 22 MPa). Such a liquid (e.g., water) or gas has, for example, a pressure exceeding 0.2 MPa and a temperature exceeding 120°C. Types of this cooker include a pressure pan type, a superheated steam type, and a frying pan type. The pressure pan type cooker can independently control a temperature and a pressure in a closed system, and performs cooking such as boiling and stewing by using the liquid. The superheated steam type cooker performs cooking such as steaming and grilling by ejecting the gas (e.g., steam) onto a cooking object from a unit in which a temperature and a pressure, at least a temperature can be controlled in a closed system or an open system. The frying pan type cooker includes an IH cooker and a frying pan placed on the IH cooker, and performs grilling by controlling a temperature and a period. Cooking using such a liquid or gas can promote hydrolysis reaction.

The operation terminal 200 is, for example, a smartphone or a tablet terminal. The operation terminal 200 is operated by a cook to perform cooking by the cooker 300. The cook may be a user of the cooker 300.

The server 100 controls the cooker 300 in accordance with cook's input operation on the operation terminal 200. That is, the server 100 is a computer that performs a control method for controlling the cooker 300 that cooks a cooking object. In other words, the server 100 is a control system for controlling the cooker 300 that cooks a cooking object.

### [Configurations of Server, Operation Terminal, and Cooker]

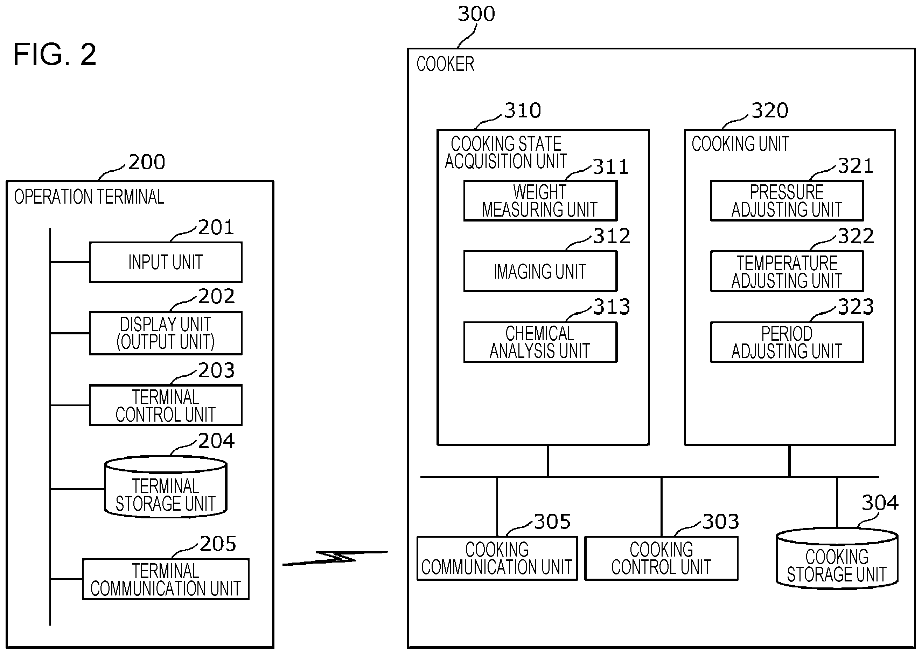

Fig. 2 is a block diagram illustrating an example of functional configurations of the operation terminal 200 and the cooker 300.

The operation terminal 200 is a computer that performs an information providing method for providing information concerning cooking of a cooking object performed by the cooker 300, and includes an input unit 201, a display unit 202, a terminal control unit 203, a terminal storage unit 204, and a terminal communication unit 205. It can also be said that the operation terminal 200 is an information providing system that provides information concerning cooking of a cooking object performed by the cooker 300.

The display unit 202 is a device that displays an image, and is, for example, a liquid crystal display or an organic Electro-Luminescence (EL) display. Note that the display unit 202 is not limited to this and may be any device that can display an image. It can also be said that the display unit 202 according to the present embodiment is an output unit that outputs information concerning cooking. Although the display unit 202 is included in the operation terminal 200 as an example of an output unit that outputs information concerning cooking in the present embodiment, an audio output unit (e.g., a speaker) that outputs the information as sound may be included as the output unit. Both of the display unit 202 and the audio output unit may be included as the output unit.

The input unit 201 is, for example, configured as a touch sensor that is disposed on the display unit 202 and receives input operation corresponding to an image of an icon displayed on the display unit 202 in response to cook's touch on the image. The input unit 201 may include a button and receive input operation corresponding to the button in response to cook's pressing of the button.

The terminal communication unit 205 communicates with the cooker 300 wirelessly or by wire. The wireless communication may be performed by Wi-Fi (Registered Trademark), Bluetooth (Registered Trademark), ZigBee (Registered Trademark), or specified low power radio. Furthermore, the terminal communication unit 205 communicates with the server 100 over the communication network. Note that the terminal communication unit 205 may directly communicate with the server 100 or may communicate with the server 100 via the cooker 300.

The terminal storage unit 204 is a recording medium for storing therein various kinds of information, data, programs, and the like. The terminal storage unit 204 is a hard disk drive, a random access memory (RAM), a read only memory (ROM), a semiconductor memory, or the like. Note that the terminal storage unit 204 may be volatile or may be non-volatile.

The terminal control unit 203 controls units such as the input unit 201, the display unit 202, and the terminal communication unit 205 by reading out and executing programs stored, for example, in the terminal storage unit 204.

The cooker 300 includes a cooking control unit 303, a cooking storage unit 304, a cooking communication unit 305, a cooking state acquisition unit 310, and a cooking unit 320.

The cooking unit 320 cooks a cooking object including one or more ingredients by giving physical action to the cooking object in accordance with cooking parameter information including three cooking parameters such as a temperature, a pressure, and a period. Such a cooking unit 320 includes a pressure adjusting unit 321, a temperature adjusting unit 322, and a period adjusting unit 323.

The pressure adjusting unit 321 adjusts a pressure given to the cooking object in accordance with a cooking parameter indicative of a pressure. The temperature adjusting unit 322 adjusts a temperature given to the cooking object in accordance with a cooking parameter indicative of a temperature. The period adjusting unit 323 adjusts a duration of the pressure or the temperature adjusted by the pressure adjusting unit 321 and the temperature adjusting unit 322 in accordance with a cooking parameter indicative of a period.

The cooking state acquisition unit 310 acquires cooking state information indicative of a state of the cooking object. The cooking state acquisition unit 310 includes a weight measuring unit 311, an imaging unit 312, and a chemical analysis unit 313. The weight measuring unit 311 measures a weight of the cooking object placed in the cooker 300. Then, the weight measuring unit 311 outputs weight data indicative of the measured weight. The imaging unit 312 is, for example, a camera and images the cooking object placed in the cooker 300. Then, the imaging unit 312 outputs image data obtained by imaging the cooking object. The imaging unit 312 is, for example, an image sensor having water resistance and high performance in a dark place. The chemical analysis unit 313 analyzes a chemical component of the cooking object placed in the cooker 300 by a method such as a liquid chromatography method or a gas chromatography method. Then, the chemical analysis unit 313 outputs chemical analysis data obtained by the analysis of the chemical component. Note that the chemical analysis unit 313 may analyze the chemical component of the cooking object by using another method such as an ether extraction method instead of the chromatography method. The chemical analysis unit 313 may analyze the chemical component of the cooking object placed in the cooker 300, for example, on the basis of information detected by an odor sensor. The odor sensor includes odor detection elements. Specifically, the odor sensor includes first to n-th odor detection elements (n is an integer greater than or equal to 2). One or more chemical components contained in the cooking object and an amount of each of the one or more chemical components may be determined by subjecting output signals of the first to n-th odor detection elements to machine learning/analysis.

The cooking state information includes the weight data, the image data, and the chemical analysis data.

The cooking communication unit 305 communicates with the operation terminal 200 wirelessly or by wire. The wireless communication may be performed by Wi-Fi, Bluetooth, or the like, as described above. Furthermore, the cooking communication unit 305 communicates with the server 100 over the communication network. Note that the cooking communication unit 305 may directly communicate with the server 100 or may communicate with the server 100 via the operation terminal 200.

The cooking storage unit 304 is a recording medium for storing therein various kinds of information, data, programs, and the like. The cooking storage unit 304 is a hard disk drive, a RAM, a ROM, or the like, as with the terminal storage unit 204. Note that the cooking storage unit 304 may be volatile or may be non-volatile.

The cooking control unit 303 controls units such as the cooking communication unit 305, the cooking state acquisition unit 310, and the cooking unit 320, for example, by reading out and executing the programs stored in the cooking storage unit 304.

Note that although the cooker 300 according to the present embodiment performs cooking in accordance with three cooking parameters, the cooker 300 may perform cooking in accordance with one or two cooking parameters or may perform cooking in accordance with four or more cooking parameters.

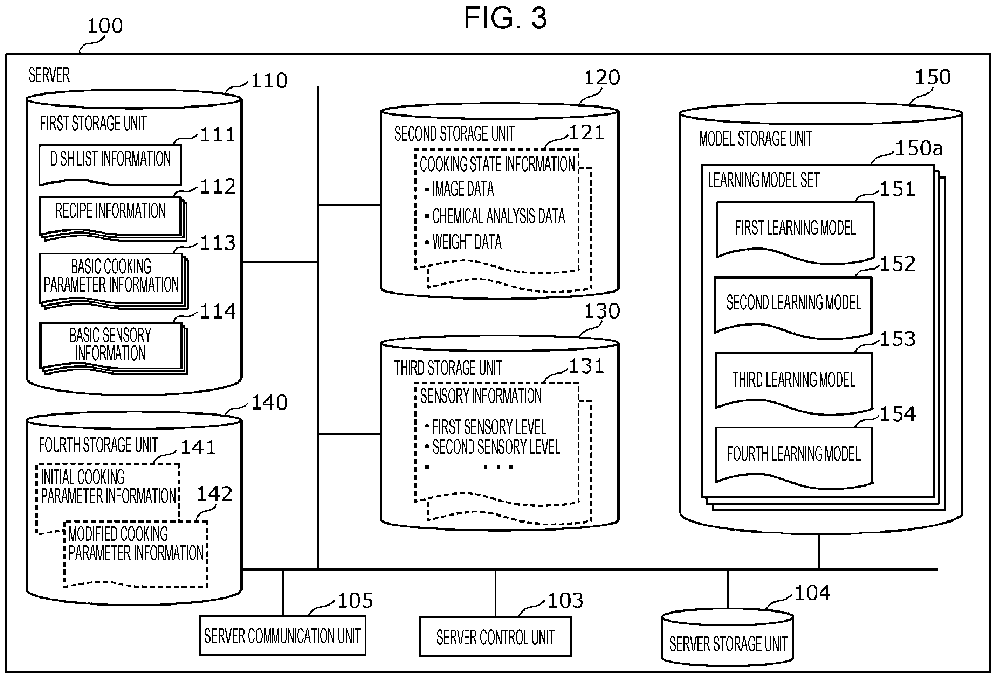

Fig. 3 is a block diagram illustrating an example of a functional configuration of the server 100.

The server 100 is a computer that controls the cooker 300 for cooking the cooking object, and includes a server control unit 103, a server storage unit 104, a server communication unit 105, a first storage unit 110, a second storage unit 120, a third storage unit 130, a fourth storage unit 140, and a model storage unit 150. The server storage unit 104, the first storage unit 110, the second storage unit 120, the third storage unit 130, the fourth storage unit 140, and the model storage unit 150 are recording media such as a hard disk drive, a RAM, or a ROM, as with the terminal storage unit 204 and the cooking storage unit 304. These recording media may be volatile or may be non-volatile. The server 100 is also called a control system.

The first storage unit 110 stores therein dish list information 111, recipe information 112, basic cooking parameter information 113, and basic sensory information 114. The dish list information 111 indicates names of dishes (hereinafter referred to as dish names). The recipe information 112 indicates, for each dish name indicated by the dish list information 111, one or more ingredients (also referred to as cooking ingredients) used for cooking of the dish name and an amount of each of the one or more ingredients. The basic cooking parameter information 113 indicates, for each dish name indicated by the dish list information 111, one or more basic cooking parameters used by the cooking unit 320 of the cooker 300 to make a dish of the dish name. The basic sensory information 114 indicates, for each dish name indicated by the dish list information 111, one or more numerical values concerning sensory characteristics of a dish that is made in accordance with the recipe information 112 and the basic cooking parameter information 113 corresponding to the dish name.

The second storage unit 120 is a recording medium for storing therein cooking state information 121 obtained by the cooking state acquisition unit 310 of the cooker 300. The cooking state information 121 includes image data, chemical analysis data, and weight data obtained at a substantially identical timing.

The third storage unit 130 is a recording medium for storing therein the sensory information 131 indicative of one or more numerical values concerning sensory characteristics of a dish or a cooking object. For example, the sensory information 131 indicates a first sensory level, a second sensory level, ... as the one or more numerical values concerning sensory characteristics. The first sensory level may be a savoriness level, and the second sensory level may be a sweet scent level.

The fourth storage unit 140 is a recording medium for storing therein initial cooking parameter information 141 and modified cooking parameter information 142. The initial cooking parameter information 141 and the modified cooking parameter information 142 are each cooking parameter information indicative of one or more cooking parameters used for cooking performed by the cooker 300. The initial cooking parameter information 141 indicates one or more cooking parameters used when the cooker 300 starts cooking. The modified cooking parameter information 142 is information obtained by modifying or changing the initial cooking parameter information 141. That is, the modified cooking parameter information 142 includes one or more modified cooking parameters obtained by modifying or changing one or more cooking parameters included in the initial cooking parameter information 141.

The model storage unit 150 stores therein, for each dish name indicated by the dish list information 111, a learning model set 150a corresponding to the dish name. The learning model set 150a includes a first learning model 151, a second learning model 152, a third learning model 153, and a fourth learning model 154. These learning models are, for example, models that have been trained by machine learning such as a neural network.

The first learning model 151 is a model for deriving the initial cooking parameter information 141. The second learning model 152 is a model for deriving, as sensory information during cooking, the sensory information 131 of a cooking object during cooking performed by the cooker 300. The third learning model 153 is a model for deriving the modified cooking parameter information 142. The fourth learning model 154 is a model for deriving, as third sensory information, final sensory information 131 of a dish obtained by cooking performed in accordance with the initial cooking parameter information 141 and the modified cooking parameter information 142 by the cooker 300.

The server communication unit 105 communicates with the operation terminal 200 and the cooker 300 over the communication network. The server storage unit 104 is a recording medium for storing therein various kinds of information, data, programs, and the like.

The server control unit 103 controls units such as the server communication unit 105 by reading out and executing the programs stored, for example, in the server storage unit 104. For example, the server control unit 103 acquires the cooking state information 121 from the cooker 300 via the server communication unit 105 and stores the cooking state information 121 in the second storage unit 120. Furthermore, the server control unit 103 acquires the sensory information 131, the initial cooking parameter information 141, and the modified cooking parameter information 142 derived by using the learning model set 150a. Then, the server control unit 103 stores the acquired sensory information 131 in the third storage unit 130 and stores the acquired initial cooking parameter information 141 and modified cooking parameter information 142 in the fourth storage unit 140.

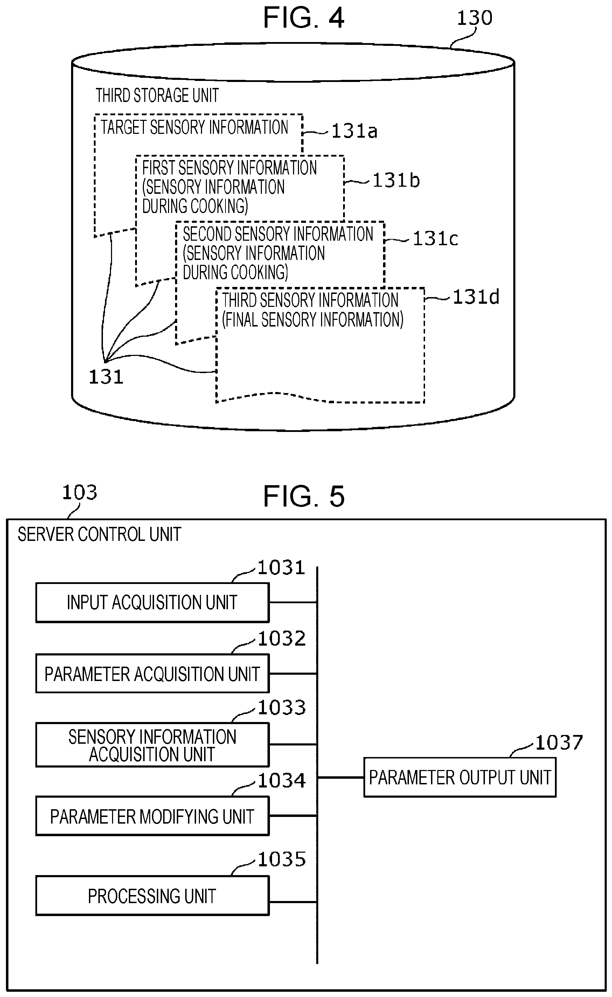

Fig. 4 illustrates details of kinds of sensory information 131 stored in the third storage unit 130.

As illustrated in Fig. 4, kinds of sensory information 131 are stored in the third storage unit 130. The kinds of sensory information 131 are target sensory information 131a, first sensory information 131b, second sensory information 131c, and third sensory information 131d, which will be described later. The target sensory information 131a is sensory information 131 which a cook aims for. The first sensory information 131b and the second sensory information 131c are each sensory information 131 of a cooking object during cooking and are also referred to as sensory information during cooking. The third sensory information 131d is sensory information 131 of a dish made by cooking and is also referred to as final sensory information.

Fig. 5 is a block diagram illustrating an example of a detailed functional configuration of the server control unit 103.

The server control unit 103 includes an input acquisition unit 1031, a parameter acquisition unit 1032, a sensory information acquisition unit 1033, a parameter modifying unit 1034, a processing unit 1035, and a parameter output unit 1037.

The input acquisition unit 1031 acquires input information from the operation terminal 200 via the server communication unit 105. The input information is information received by the terminal control unit 203 in response to cook's input operation on the input unit 201 of the operation terminal 200. The cook inputs, for example, a name of a dish (i.e., a dish name) to be made by the cooker 300 and a numerical value concerning target sensory characteristics by performing input operation on the input unit 201 of the operation terminal 200. The numerical value concerning sensory characteristics is also called a sensory level or a sensory evaluation value. As a result, the terminal control unit 203 receives input information including dish information indicative of the dish name and the target sensory information 131a indicative of a numerical value concerning target sensory characteristics. The input acquisition unit 1031 acquires the input information from the terminal control unit 203 via the terminal communication unit 205 and the server communication unit 105.

That is, the input acquisition unit 1031 according to the present embodiment acquires dish information indicative of a dish to be obtained by cooking a cooking object and (b) the target sensory information 131a indicative of a target of one or more numerical values concerning sensory characteristics.

The parameter acquisition unit 1032 acquires cooking parameter information indicative of one or more cooking parameters by using the input information and the learning model set 150a stored in the model storage unit 150. That is, the parameter acquisition unit 1032 acquires cooking parameter information including one or more cooking parameters used for cooking performed by the cooker 300 by using the learning model set 150a on the basis of the dish information and the target sensory information 131a acquired by the input acquisition unit 1031. This cooking parameter information is the initial cooking parameter information 141. In the present embodiment, the one or more cooking parameters include a cooking parameter indicative of a temperature used for cooking performed by the cooker 300 and a cooking parameter indicative of a period used for cooking performed by the cooker 300. Furthermore, the one or more cooking parameters include a cooking parameter indicative of a pressure used for cooking performed by the cooker 300.

The parameter output unit 1037 transmits the initial cooking parameter information 141 to the cooker 300 via the server communication unit 105. Upon acquisition of the transmitted initial cooking parameter information 141 via the cooking communication unit 305, the cooking unit 320 of the cooker 300 starts cooking in accordance with the initial cooking parameter information 141.

The sensory information acquisition unit 1033 acquires the sensory information 131, for example, by using the cooking state information 121 stored in the second storage unit 120 and the learning model set 150a stored in the model storage unit 150. The sensory information 131 thus acquired indicates one or more numerical values concerning sensory characteristics of a cooking object during cooking performed by the cooker 300 and is also referred to as sensory information during cooking (i.e., the first sensory information 131b or the second sensory information 131c). That is, the sensory information acquisition unit 1033 acquires sensory information during cooking indicative of one or more numerical values concerning sensory characteristics of a cooking object during cooking of the cooking object performed in accordance with the cooking parameter information by the cooker 300.

The parameter modifying unit 1034 changes the initial cooking parameter information 141 to the modified cooking parameter information 142 including one or more modified cooking parameters on the basis of the target sensory information 131a and the sensory information during cooking. In other words, the parameter modifying unit 1034 modifies the initial cooking parameter information 141 to the modified cooking parameter information 142. The learning model set 150a stored in the model storage unit 150 is used to modify the initial cooking parameter information 141.

The parameter output unit 1037 outputs a control signal including the modified cooking parameter information 142 to the cooker 300 via the server communication unit 105. In other words, the parameter output unit 1037 transmits a control signal including the modified cooking parameter information 142. Upon acquisition of the transmitted modified cooking parameter information 142 via the cooking communication unit 305, the cooking unit 320 of the cooker 300 stops cooking based on the initial cooking parameter information 141 and performs cooking based on the modified cooking parameter information 142.

Note that also when transmitting the initial cooking parameter information 141, the parameter output unit 1037 may transmit a control signal including the initial cooking parameter information 141 to the cooker 300, as with the case of the modified cooking parameter information 142. Hereinafter, the initial cooking parameter information 141 or the modified cooking parameter information 142 is transmitted or output in a state where this information is included in a control signal.

The processing unit 1035 performs processing different from processing performed by the constituent elements other than the processing unit 1035 included in the server control unit 103. For example, the processing unit 1035 transmits the third sensory information 131d stored in the third storage unit 130 to the operation terminal 200 via the server communication unit 105.

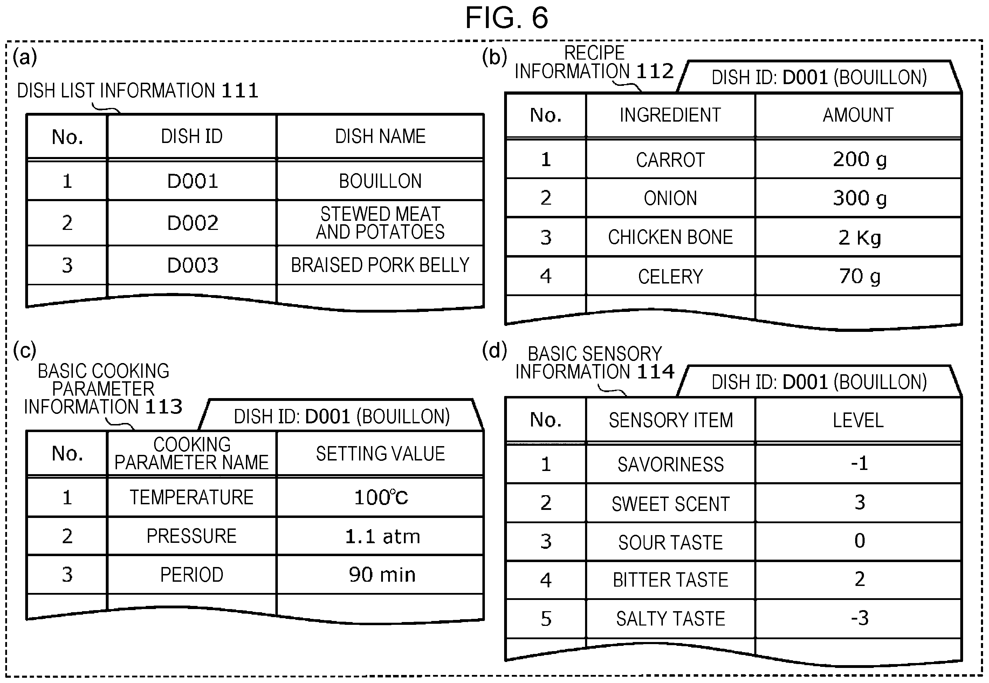

Fig. 6 illustrates an example of the dish list information 111, the recipe information 112, the basic cooking parameter information 113, and the basic sensory information 114.

The dish list information 111 indicates, for each record number, a dish ID and a dish name corresponding to the record number, for example, as illustrated in Fig. 6(a). The dish ID is identification information for identifying a dish name and a dish. Specifically, a dish ID "D001" and a dish name "bouillon" are associated with a record number "1".

The recipe information 112 is associated with a dish ID and indicates one or more ingredients used for a dish identified by the dish ID and an amount of each of the one or more ingredients, for example, as illustrated in Fig. 6(b). Specifically, the recipe information 112 indicates, for each record number, an ingredient corresponding to the record number and an amount of the ingredient. More specifically, in the recipe information 112 associated with the dish ID "D0001", that is, the dish name "bouillon", an ingredient "carrot" and an amount "200 g" of the ingredient "carrot" are associated with the record number "1".

The basic cooking parameter information 113 is associated with a dish ID and indicates one or more cooking parameters used by the cooker 300 to make a dish identified by the dish ID, for example, as illustrated in Fig. 6(c). Each of the one or more cooking parameters includes a cooking parameter name and a setting value. Specifically, the basic cooking parameter information 113 indicates, for each record number, a cooking parameter name and a setting value corresponding to the record number. More specifically, in the basic cooking parameter information 113 associated with the dish ID "D0001", that is, the dish name "bouillon", a cooking parameter name "temperature" and a setting value "100°C" are associated with a record number "1". That is, in the record number "1", the temperature "100°C" is indicated as a cooking parameter. Note that the setting value may be, for example, indicated as a numerical value range such as "90°C to 110°C". In a case where a single numerical value such as "100°C" is indicated as the setting value, the numerical value may be an average or a median of setting values (e.g., temperatures) from start to end of cooking performed by the cooker 300.

The basic sensory information 114 is associated with a dish ID and indicates one or more numerical values concerning basic sensory characteristics of a dish indicated by the dish ID, for example, as illustrated in Fig. 6(d). Specifically, the basic sensory information 114 indicates, for each record number, a sensory item and a level corresponding to the record number. More specifically, in the basic sensory information 114 associated with the dish ID "D0001", that is, the dish name "bouillon", a sensory item "savoriness" and a level "-1" are associated with a record number "1". That is, in the record number "1", the savoriness "-1" is indicated as a numerical value concerning sensory characteristics, that is, a sensory level. Note that the sensory item indicates a type of sensory level. Although the sensory level in the present embodiment is a numerical value within a numerical range from -3 to 3, this is not restrictive, and the sensory level may be a numerical value within any numerical range. The sensory level may be an integer or may be a decimal. Note that the level may be indicated as a numerical range such as "-1 to 1".

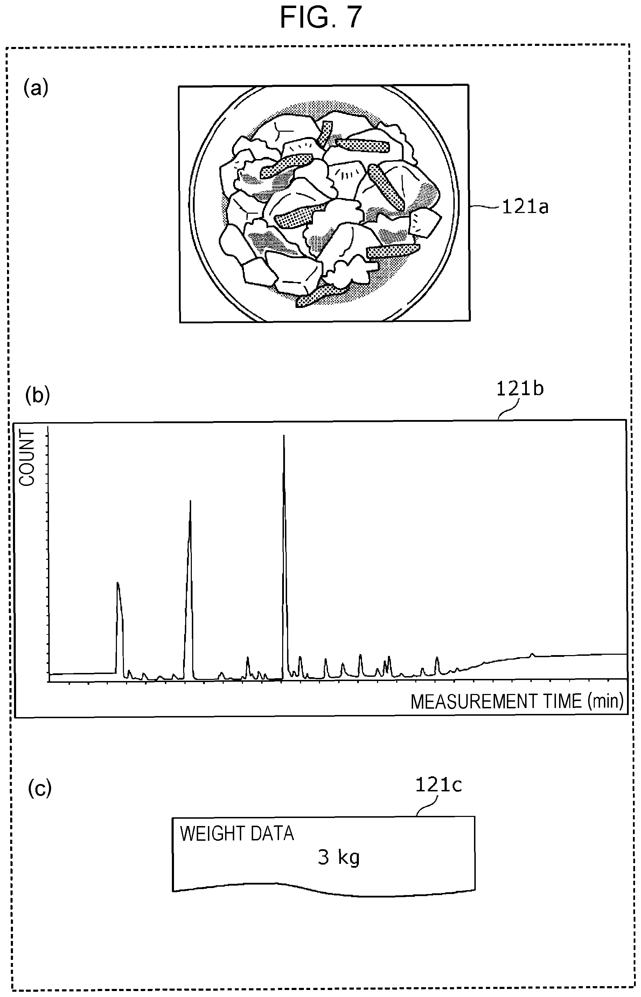

Fig. 7 illustrates an example of image data, chemical analysis data, and weight data included in the cooking state information 121.

Image data 121a is data indicative of an image showing a cooking object placed in the cooker 300, for example, as illustrated in Fig. 7(a). The image data 121a is obtained by imaging using the imaging unit 312 of the cooker 300.

Chemical analysis data 121b is data indicative of a graph obtained, for example, by liquid chromatography, for example, as illustrated in Fig. 7(b). The horizontal axis of the graph represents a measurement time, and the vertical axis of the graph represents the number of counts measured at the measurement time. The chemical analysis data 121b is obtained by analysis using the chemical analysis unit 313 of the cooker 300. It can be said that such a graph indicates an amount of each of one or more chemical components. The graph may be called a chromatogram. Note that the chemical analysis unit 313 may acquire, as the chemical analysis data 121b, not data indicative of the graph itself, but data directly indicating amounts of some chemical components. That is, the chemical analysis unit 313 may derive amounts of predetermined chemical components from the graph and output the chemical analysis data 121b directly indicating the derived amounts of the chemical components.

Weight data 121c is data indicative of a weight of a cooking object placed in the cooker 300, for example, as illustrated in Fig. 7(c). The weight data 121c is obtained by measurement using the weight measuring unit 311 of the cooker 300.

### [Screen Display]

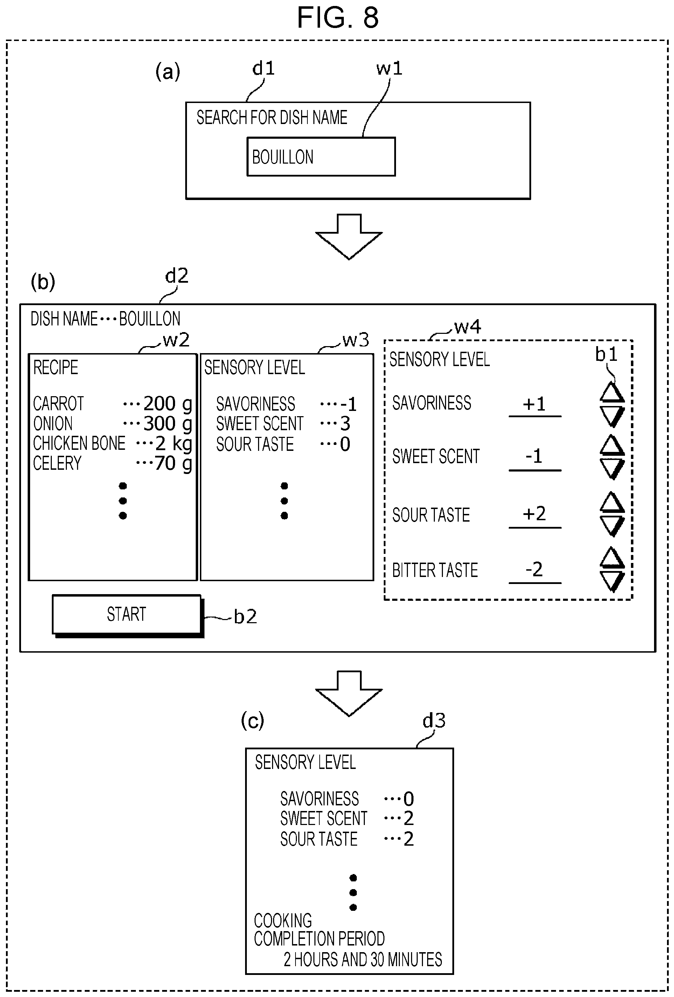

Fig. 8 illustrates an example of a screen displayed on the operation terminal 200.

The terminal control unit 203 of the operation terminal 200 displays a search screen d1 on the display unit 202, for example, as illustrated in Fig. 8(a). The search screen d1 has an input field w1 for receiving input of a dish name. A cook enters a dish name of a dish which the cook is going to make into the input field w1 by performing input operation on the input unit 201 of the operation terminal 200. For example, the cook enters a dish name "bouillon" into the input field w1. As a result, the terminal control unit 203 acquires input information indicative of the dish name "bouillon", stores the input information in the terminal storage unit 204, and transmits the input information to the server 100 via the terminal communication unit 205.

The input acquisition unit 1031 of the server 100 acquires, as dish information, the input information from the operation terminal 200 via the server communication unit 105, and stores the dish information, for example, in the server storage unit 104. The processing unit 1035 searches the dish list information 111 stored in the first storage unit 110 for the dish name "bouillon" indicated by the dish information acquired by the input acquisition unit 1031. When the processing unit 1035 finds the dish name "bouillon" from the dish list information 111, the processing unit 1035 specifies a dish ID associated with the dish name "bouillon". Then, the processing unit 1035 acquires, from the first storage unit 110, the recipe information 112 and the basic sensory information 114 associated with the dish ID.

The processing unit 1035 generates a sensory characteristic input screen d2 illustrated, for example, in Fig. 8(b) by using the recipe information 112 and the basic sensory information 114 and transmits information indicative of the sensory characteristic input screen d2 to the operation terminal 200 via the server communication unit 105. Upon acquisition of the information from the server 100 via the terminal communication unit 205, the terminal control unit 203 of the operation terminal 200 causes the sensory characteristic input screen d2 indicated by the information to be displayed on the display unit 202. The sensory characteristic input screen d2 includes a recipe field w2, a basic sensory characteristic field w3, a sensory characteristic adjustment field w4, and a start button b2. In the recipe field w2, one or more ingredients used to make the dish "bouillon" indicated by the recipe information 112 and an amount of each of the one or more ingredients are displayed. In the basic sensory characteristic field w3, sensory levels of the dish "bouillon" indicated by the basic sensory information 114 are displayed.

In the sensory characteristic adjustment field w4, operation buttons b1 for changing the sensory levels displayed in the basic sensory characteristic field w3 are displayed. A cook operates an operation button b1 corresponding to a sensory level which the cook wants to change among the operation buttons b1. Upon receipt of input information according to the input operation on the operation button b1, the terminal control unit 203 of the operation terminal 200 changes the sensory level corresponding to the operation button b1.

For example, when an operation button b1 corresponding to savoriness is operated, the terminal control unit 203 changes the savoriness "-1" displayed in the basic sensory characteristic field w3 by "+1". That is, the terminal control unit 203 receives savoriness "0" as a sensory level which the cook desires or as a target sensory level. Similarly, when an operation button b1 corresponding to sweet scent is operated, the terminal control unit 203 changes sweet scent "3" displayed in the basic sensory characteristic field w3 by "-1". That is, the terminal control unit 203 receives sweet scent "2" as a sensory level which the cook desires or as a target sensory level. In a case where the cook wants to change a sensory level other than savoriness and sweet scent, the cook repeatedly operates an operation button b1 corresponding to the sensory level. Then, the cook operates the start button b2 displayed on the sensory characteristic input screen d2. Upon receipt of the input operation on the start button b2, the terminal control unit 203 acquires, as the target sensory information 13 1a, input information indicative of targets of sensory levels of savoriness, sweet scent, sour taste, bitter taste, and the like. Then, the terminal control unit 203 transmits the target sensory information 131a to the server 100 via the terminal communication unit 205.

Note that a change width of a sensory level may be limited to a predetermined width or less. When one of the sensory levels is changed, the remaining sensory levels may be changed in response to the change of the one sensory level. In the sensory characteristic adjustment field w4, only one of the sensory levels displayed in the basic sensory characteristic field w3 may be displayed as a changeable sensory level instead of displaying all of the sensory levels.

The sensory information acquisition unit 1033 of the server 100 acquires the target sensory information 131a from the operation terminal 200 via the server communication unit 105 and stores the target sensory information 131a in the third storage unit 130. Then, the server control unit 103 derives the initial cooking parameter information 141 by using the target sensory information 131a. Furthermore, the server control unit 103 modifies the initial cooking parameter information 141 to the modified cooking parameter information 142 by using information such as the cooking state information 121 acquired by the cooker 300. Furthermore, the server control unit 103 estimates one or more sensory levels of the dish "bouillon" obtained by cooking performed in accordance with the initial cooking parameter information 141 and the modified cooking parameter information 142 by the cooker 300. That is, the server control unit 103 derives the third sensory information 131d as final sensory information. Then, the server control unit 103 stores the third sensory information 131d in the third storage unit 130 and transmits the third sensory information 131d to the operation terminal 200 via the server communication unit 105. The server control unit 103 may transmit a modified cooking parameter concerning the period included in the modified cooking parameter information 142 to the operation terminal 200 via the server communication unit 105.

The terminal control unit 203 of the operation terminal 200 acquires the third sensory information 131d and the modified cooking parameter concerning the period from the server 100 via the terminal communication unit 205. Then, the terminal control unit 203 causes a final sensory characteristic screen d3 for displaying the information such as the third sensory information 131d to be displayed on the display unit 202, for example, as illustrated in Fig. 8(c). On the final sensory characteristic screen d3, sensory levels indicated by the third sensory information 131d are displayed. Furthermore, on the final sensory characteristic screen d3, the period indicated by the modified cooking parameter is displayed, for example, as a cooking completion period "two hours and thirty minutes".

The cook can recognize that the dish having one or more sensory levels identical to the target sensory information 131a is to be made by seeing the one or more sensory levels displayed on the final sensory characteristic screen d3 in response to input of the target sensory information 131a. Alternatively, the cook can recognize that the dish having a sensory level different from the target sensory information 131a is to be cooked even in a case where cooking is attempted so that the dish has a sensory level identical to the target sensory information 131a. Alternatively, the cook can recognize how close a sensory level of a finally obtained dish is to cook's desire. Furthermore, the cook can grasp a period in which cooking of the dish is completed.

Although each of the sensory levels is displayed as a numerical value in the example illustrated in Fig. 8(c), each of the sensory levels may be displayed as a radar chart, a graph, or the like or may be displayed as the number of stars.

Note that in a case where a sensory level is displayed as a numerical range in the basic sensory characteristic field w3, for example, a median of the numerical range may be changed by the operation button b1 of the sensory characteristic adjustment field w4. In this case, a width from a minimum value to a maximum value of the numerical range may be kept constant. For example, savoriness "-1 to 1" is displayed in the basic sensory characteristic field w3, and is changed by "+1" by operation of the operation button b1. In this case, the terminal control unit 203 receives savoriness "0 to 2" as savoriness which the cook desires or as target savoriness. Furthermore, medians of numerical ranges of the initial cooking parameter information 141 and the modified cooking parameter information 142 may be changed, for example, so that savoriness "-1 to 1" approaches "0 to 2".

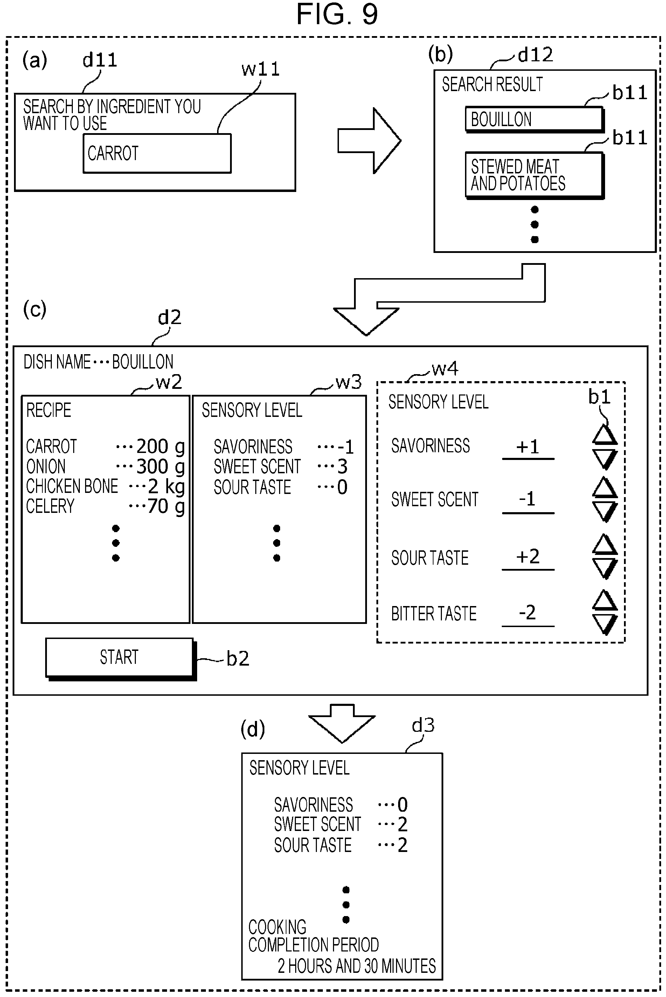

Fig. 9 illustrates another example of a screen displayed on the operation terminal 200.

Although the cook directly inputs a dish name in the example illustrated in Fig. 8, the cook may input a name of an ingredient (i.e., a cooking ingredient) used to make a dish of the dish name. For example, the terminal control unit 203 of the operation terminal 200 displays a cooking ingredient input screen d11 on the display unit 202, as illustrated in Fig. 9(a). The cooking ingredient input screen d11 has an input field w11 for receiving input of a name of an ingredient which the cook wants to use. The cook enters a name of a cooking ingredient which the cook wants to use into the input field w11 by performing input operation on the input unit 201 of the operation terminal 200. For example, the cook enters a name of a cooking ingredient "carrot" into the input field w11. As a result, the terminal control unit 203 acquires input information indicative of the name of the cooking ingredient "carrot", and stores the input information in the terminal storage unit 204 and transmits the input information to the server 100 via the terminal communication unit 205.

The input acquisition unit 1031 of the server 100 acquires the input information from the operation terminal 200 via the server communication unit 105 and stores the input information, for example, in the server storage unit 104. The input acquisition unit 1031 searches for one or more pieces of recipe information 112 indicating the name of the cooking ingredient "carrot" from among the pieces of recipe information 112 stored in the first storage unit 110. Then, the input acquisition unit 1031 specifies a dish ID associated with each of the one or more pieces of recipe information 112. That is, the input acquisition unit 1031 specifies a dish name identified by the dish ID. The input acquisition unit 1031 transmits search result information indicative of the specified one or more dish names to the operation terminal 200 via the server communication unit 105.

Upon acquisition of the search result information from the server 100 via the terminal communication unit 205, the terminal control unit 203 of the operation terminal 200 causes a search result screen d12 to be displayed on the display unit 202, for example, as illustrated in Fig. 9(b). The search result screen d12 includes, for each of the one or more dishes indicated by the search result information, a dish name button b11 where a dish name of the dish is written. The cook selects the dish name button b11 corresponding to a dish which the cook wants to make by performing input operation on the input unit 201 of the operation terminal 200. For example, the cook selects the dish name button b11 where the dish name "bouillon" is written. As a result, the terminal control unit 203 of the operation terminal 200 acquires input information indicative of the dish name "bouillon" written on the selected dish name button b11, and stores the input information in the terminal storage unit 204 and transmits the input information to the server 100 via the terminal communication unit 205.

The input acquisition unit 1031 of the server 100 acquires the input information as dish information from the operation terminal 200 via the server communication unit 105 and stores the dish information, for example, in the server storage unit 104. The processing unit 1035 searches the dish list information 111 stored in the first storage unit 110 for the dish name "bouillon" indicated by the dish information acquired by the input acquisition unit 1031. When the processing unit 1035 finds the dish name "bouillon" from the dish list information 111, the processing unit 1035 specifies a dish ID associated with the dish name "bouillon". Then, the processing unit 1035 acquires the recipe information 112 and the basic sensory information 114 associated with the dish ID from the first storage unit 110.

Then, the operation terminal 200 displays the sensory characteristic input screen d2 and the final sensory characteristic screen d3 on the display unit 202 by communicating with the server 100, as illustrated in Figs. 9(c) and 9(d), as with the case of Figs. 8(b) and 8(c).

The operation terminal 200 is a computer that performs an information providing method for providing information concerning the cooker 300 that cooks a cooking object. That is, the operation terminal 200 receives (a) dish information indicative of a dish to be obtained by cooking a cooking object and (b) the target sensory information 131a indicative of a target of each of one or more numerical values concerning sensory characteristics in accordance with operation of a user who is a cook. Then, the operation terminal 200 outputs final sensory information concerning sensory characteristics of the dish that is derived on the basis of the dish information and the target sensory information 131a and sensory information during cooking, which is the sensory information 131 of the cooking object during cooking of the cooking object performed by the cooker 300. The final sensory information is the third sensory information 131d.

When dish information indicative of a dish which the cook desires and the target sensory information 131a which the cook desires are received, one or more numerical values (i.e., sensory levels) concerning sensory characteristics of a dish to be finally obtained can be thus presented to the cook in accordance with these pieces of information. Therefore, the cook can properly grasp sensory characteristics of the dish to be obtained by cooking. That is, the cook can check whether or not a dish having a sensory level which the cook desires is made or how close a sensory level of a dish to be finally obtained is to cook's desire.

Note that although the input unit 201 of the operation terminal 200 receives text data of a dish name, a name of an ingredient, or the like in response to cook's input operation in the above example, the input unit 201 of the operation terminal 200 may receive an audio signal. In this case, the input unit 201 includes a microphone and receives an audio signal output from the microphone. Then, the terminal control unit 203 acquires input information indicative of a dish name or a name of an ingredient by performing voice recognition on the audio signal.

### [Processing Operation]

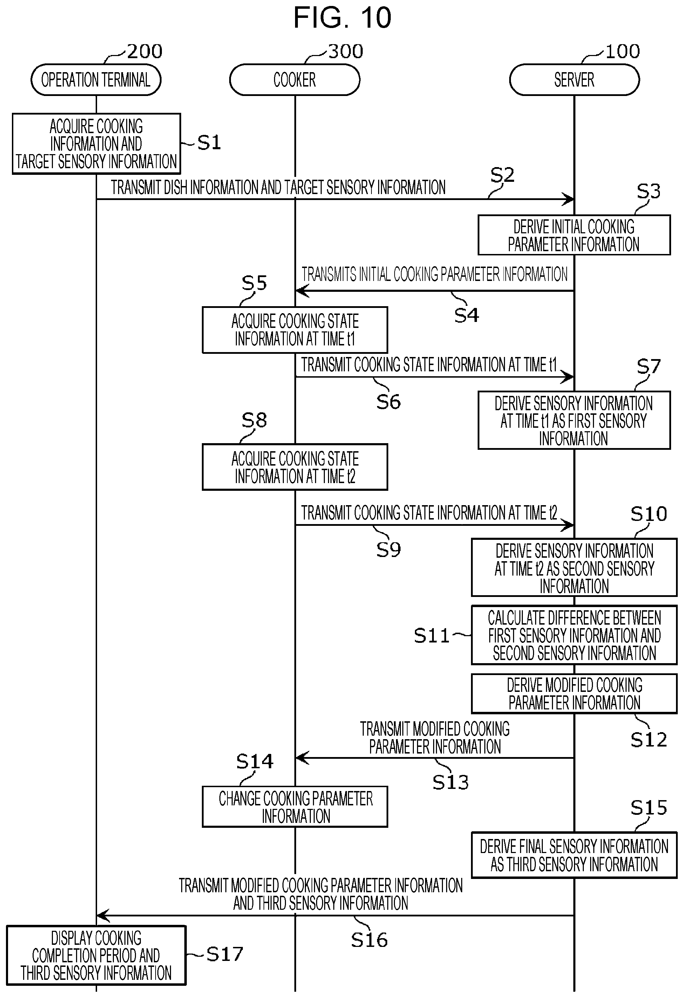

Fig. 10 is a sequence diagram illustrating an example of processing operation of the information processing system 1000.

### (Step S1)

First, the operation terminal 200 acquires dish information and the target sensory information 131a in response to cook's input operation on the input unit 201.

### (Step S2)

The operation terminal 200 transmits the dish information and the target sensory information 131a acquired in step S1 to the server 100.

### (Step S3)

Upon receipt of the dish information and the target sensory information 131a transmitted from the operation terminal 200 in step S2, the server 100 derives the initial cooking parameter information 141 by using these pieces of information. To derive the initial cooking parameter information 141, a learning model set 150a corresponding to a dish indicated by the dish information among the learning model sets 150a stored in the model storage unit 150 is used. Specifically, the first learning model 151 included in the learning model set 150a is used.

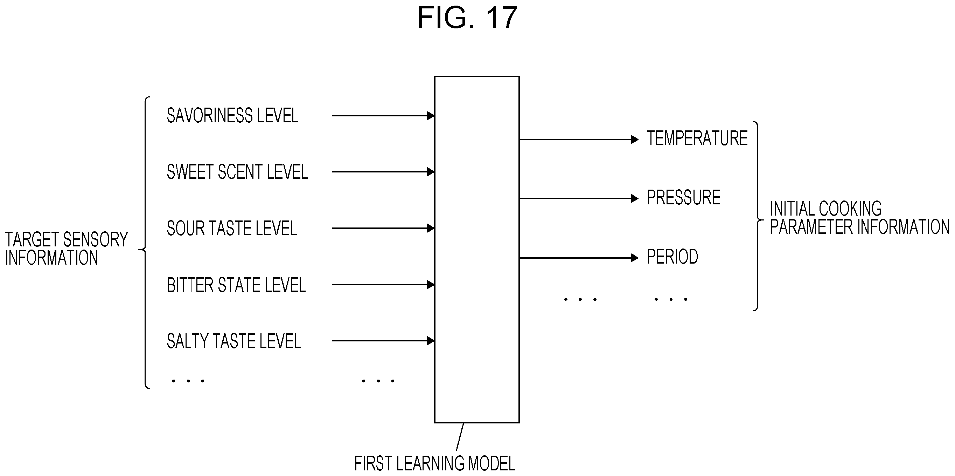

Fig. 17 illustrates an example of the first learning model 151. The target sensory information 131a is input to the first learning model 151. The initial cooking parameter information 141 is output from the first learning model 151.

The target sensory information 131a includes a savoriness level of a dish indicated by dish information, a sweet scent level of the dish indicated by the dish information, a sour taste level of the dish indicated by the dish information, a bitter taste level of the dish indicated by the dish information, and a salty taste level of the dish indicated by the dish information.

The savoriness level, sweet scent level, sour taste level, bitter taste level, and salty taste level are designated by the user.

The initial cooking parameter information 141 includes a temperature, a pressure, and a period used by a cooker to cook a cooking object so that the dish indicated by the dish information has the savoriness level, sweet scent level, sour taste level, bitter taste level, and salty taste level designated by the user. The cooking object may include one or more ingredients.

### (Step S4)

The server 100 transmits the derived initial cooking parameter information 141 to the cooker 300.

### (Step S5)

Upon receipt of the initial cooking parameter information 141 from the server 100, the cooker 300 starts cooking of the cooking object placed in the cooker 300 by controlling a pressure, a temperature, and a period in accordance with the initial cooking parameter information 141. Then, the cooker 300 acquires the cooking state information 121 at a time t1. The time t1 is a time after elapse of a first period from the start of cooking performed by the cooker 300. Note that the first period may be a predetermined period and may be 0. That is, the time t1 may be a time at the start of cooking performed by the cooker 300.

### (Step S6)

The cooker 300 transmits the cooking state information 121 at the time t1 to the server 100.

### (Step S7)

Upon receipt of the cooking state information 121 at the time t1 from the cooker 300, the server 100 derives sensory information 131 of the cooking object at the time t1 as the first sensory information 131b by using the cooking state information 121. Note that the first sensory information 131b is sensory information during cooking. To derive the first sensory information 131b, the learning model set 150a corresponding to the dish indicated by the dish information among the learning model sets 150a stored in the model storage unit 150 is used. Specifically, the second learning model 152 included in the learning model set 150a is used.

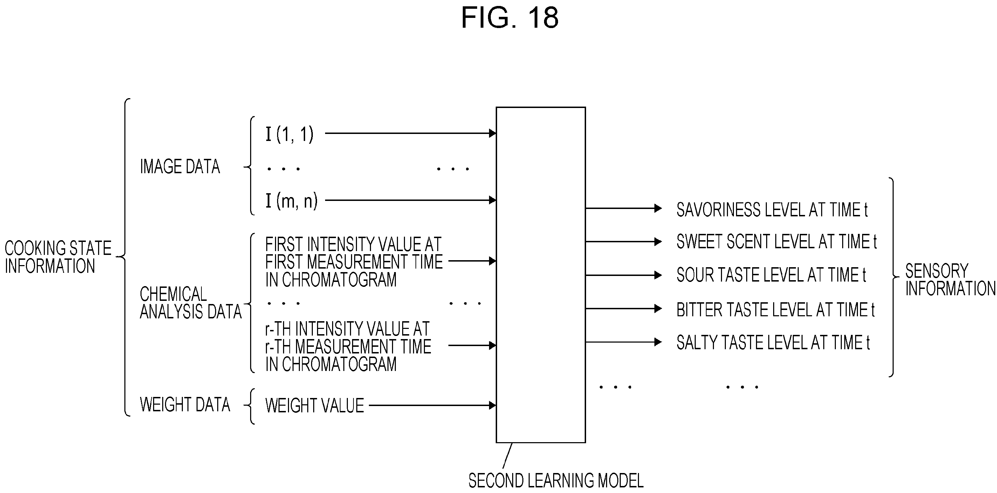

Fig. 18 illustrates an example of the second learning model 152. The cooking state information 121 is input to the second learning model 152. The sensory information 131 is output from the second learning model 152.

The cooking state information 121 includes the image data 121a, the chemical analysis data 121b, and the gravity data 121c.

The image data 121a may be m × n pixel values of an image (see, for example, Fig. 7(a)) obtained by imaging, at a time t by the imaging unit 312, a cooking object cooked by the cooker 300 controlled on the basis of the initial cooking parameter information 141 from the cooking start time to the time t. The m × n pixel values may be I (1, 1) to I (m, n). I (1, 1) is a pixel value of a pixel (1, 1) of the image, ..., and I (m, n) is a pixel value of a pixel (m, n) of the image. The pixel (1, 1) is located at (x, y) = (1, 1) in the image, ..., and the pixel (m, n) is located at (x, y) = (m, n) in the image. m may be an integer greater than or equal to 2, and n may be an integer greater than or equal to 2. An example of XY coordinate axes is illustrated in Fig. 7(a).

The chemical analysis data 121b may be r intensity values in a chromatogram (see, for example, Fig. 7(b)) obtained by measuring, by the chemical analysis unit 313 starting from the time t, the cooking object cooked by the cooker 300 controlled on the basis of the initial cooking parameter information 141 from the cooking start time to the time t. The r intensity values may be a first intensity value at a first measurement time in the chromatogram to an r-th intensity value at an r-th measurement time in the chromatogram. r may be an integer greater or equal to 1.

The chemical analysis data 121b may be s amounts of s chemical components. The s amounts of the s chemical components may be a first amount of a first chemical component to an s-th amount of an s-th chemical component. s may be an integer greater or equal to 1.

The weight data 121c may be a weight value obtained by measuring, by the weight measuring unit 311 at the time t, the cooking object cooked by the cooker 300 controlled on the basis of the initial cooking parameter information 141 from the cooking start time to the time t.

The sensory information 131 includes a savoriness level, a sweet scent level, a sour taste level, a bitter taste level, and a salty taste level at the time t of the cooking object cooked by the cooker 300 controlled on the basis of the initial cooking parameter information 141 from the cooking start time to the time t.

The time t corresponds to the time t1 in step S7. The time t corresponds to a time t2 in step S10, which will be described later.

### (Step S8)

The cooker 300 acquires the cooking state information 121 at the time t2. The time t2 is a time after elapse of a second period from the start of cooking performed by the cooker 300 and is later than the time after elapse of the first period. The second time may be a predetermined period longer than the first period.

### (Step S9)

The cooker 300 transmits the cooking state information 121 at the time t2 to the server 100.

### (Step S10)

Upon receipt of the cooking state information 121 at the time t2 from the cooker 300, the server 100 derives, as the second sensory information 131c, the sensory information 131 of the cooking object at the time t2 by using the cooking state information 121. Note that the second sensory information 131c is sensory information during cooking, as with the first sensory information 131b. To derive the second sensory information 131c, the learning model set 150a corresponding to the dish indicated by the dish information among the learning model sets 150a stored in the model storage unit 150 is used. Specifically, the second learning model 152 included in the learning model set 150a is used.

### (Step S11)

The server 100 calculates a difference between the first sensory information 131b and the second sensory information 131c. That is, the server 100 calculates, for each of one or more sensory items, a difference between a sensory level of the sensory item indicated by the first sensory information 131b and a sensory level of the sensory item indicated by the second sensory information 131c.

The above description "the server 100 calculates a difference between the first sensory information 131b and the second sensory information 131c" may be interpreted as "the server 100 calculates difference information on the basis of the first sensory information 131b and the second sensory information 131c".

The difference information may include:
{(the savoriness level included in the second sensory information 131c) - (the savoriness level included in the first sensory information 131b)},
{(the sweet scent level included in the second sensory information 131c) - (the sweet scent level included in the first sensory information 131b)},
{(the sour taste level included in the second sensory information 131c) - (the sour taste level included in the first sensory information 131b)},
(the bitter taste level included in the second sensory information 131c) - (the bitter taste level included in the first sensory information 131b)}, and
{(the salty taste level included in the second sensory information 131c) - (the salty taste level included in the first sensory information 131b).

The difference information may include:
{(the savoriness level at the time t2 of the cooking object cooked by the cooker 300 controlled on the basis of the initial cooking parameter information 141 from the cooking start time to the time t2) - (the savoriness level at the time t1 of the cooking object cooked by the cooker 300 controlled on the basis of the initial cooking parameter information 141 from the cooking start time to the time t2)},
{(the sweet scent level at the time t2 of the cooking object cooked by the cooker 300 controlled on the basis of the initial cooking parameter information 141 from the cooking start time to the time t2) - (the sweet scent level at the time t1 of the cooking object cooked by the cooker 300 controlled on the basis of the initial cooking parameter information 141 from the cooking start time to the time t2)},
{(the sour taste level at the time t2 of the cooking object cooked by the cooker 300 controlled on the basis of the initial cooking parameter information 141 from the cooking start time to the time t2) - (the sour taste level at the time t1 of the cooking object cooked by the cooker 300 controlled on the basis of the initial cooking parameter information 141 from the cooking start time to the time t2)},
{(the bitter taste level at the time t2 of the cooking object cooked by the cooker 300 controlled on the basis of the initial cooking parameter information 141 from the cooking start time to the time t2) - (the bitter taste level at the time t1 of the cooking object cooked by the cooker 300 controlled on the basis of the initial cooking parameter information 141 from the cooking start time to the time t2)}, and
{(the salty taste level at the time t2 of the cooking object cooked by the cooker 300 controlled on the basis of the initial cooking parameter information 141 from the cooking start time to the time t2) - (the salty taste level at the time t1 of the cooking object cooked by the cooker 300 controlled on the basis of the initial cooking parameter information 141 from the cooking start time to the time t2)}.

### (Step S12)

Next, the server 100 derives the modified cooking parameter information 142 by using the difference calculated in step S11. To derive the modified cooking parameter information 142, the learning model set 150a corresponding to the dish indicated by the dish information among the learning model sets 150a stored in the model storage unit 150 is used. Specifically, the third learning model 153 included in the learning model set 150a is used.

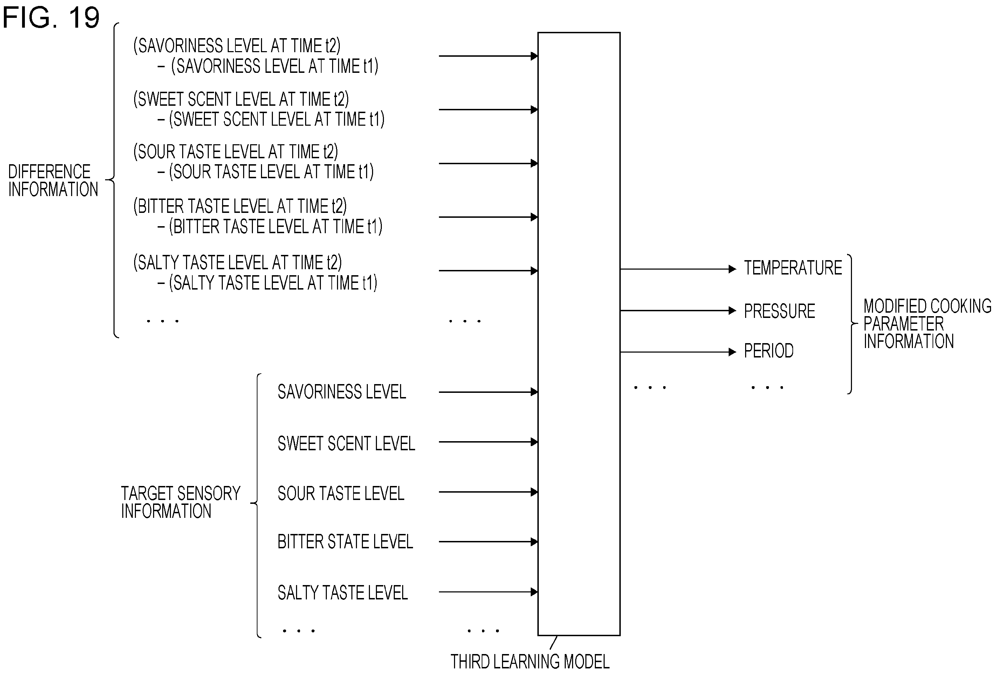

Fig. 19 illustrates an example of the third learning model 153. The difference information calculated on the basis of the first sensory information 131b and the second sensory information 131c and the target sensory information 131a are input to the third learning model 152. The modified cooking parameter information 142 is output from the third learning model 153.

The modified cooking parameter information 142 includes a temperature, a pressure, and a period used by cooker 300 to cook, from a time t4, the cooking object cooked by the cooker 300 controlled on the basis of the initial cooking parameter information 141 from the cooking start time to a time t3 so that the dish indicated by the dish information has the savoriness level, the sweet scent level, the sour taste level, the bitter taste level, and the salty taste level designated by the user, which is indicated by the target sensory information 131a.

The time t4 may be later than the time t3 or may be identical to the time t3. The time t3 may be later than the time t1 and the time t2. The time t1 and the time t2 may be later than the cooking start time.

### (Step S13)

Then, the server 100 transmits the modified cooking parameter information 142 derived in step S12 to the cooker 300.

### (Step S14)

The cooker 300 receives the modified cooking parameter information 142 transmitted in step S13 and changes the initial cooking parameter information 141 to the modified cooking parameter information 142. That is, the cooker 300 stops cooking based on the initial cooking parameter information 141 and starts cooking based on the modified cooking parameter information 142.

### (Step S15)

The server 100 derives, as the third sensory information 131d, final sensory information 131 of the dish indicated by the dish information to be obtained when the dish is made by using the modified cooking parameter information 142 derived in step S12. That is, the third sensory information 131d is estimated. To derive the third sensory information 131d, the learning model set 150a corresponding to the dish indicated by the dish information among the learning model sets 150a stored in the model storage unit 150 is used. Specifically, the fourth learning model 154 included in the learning model set 150a is used.

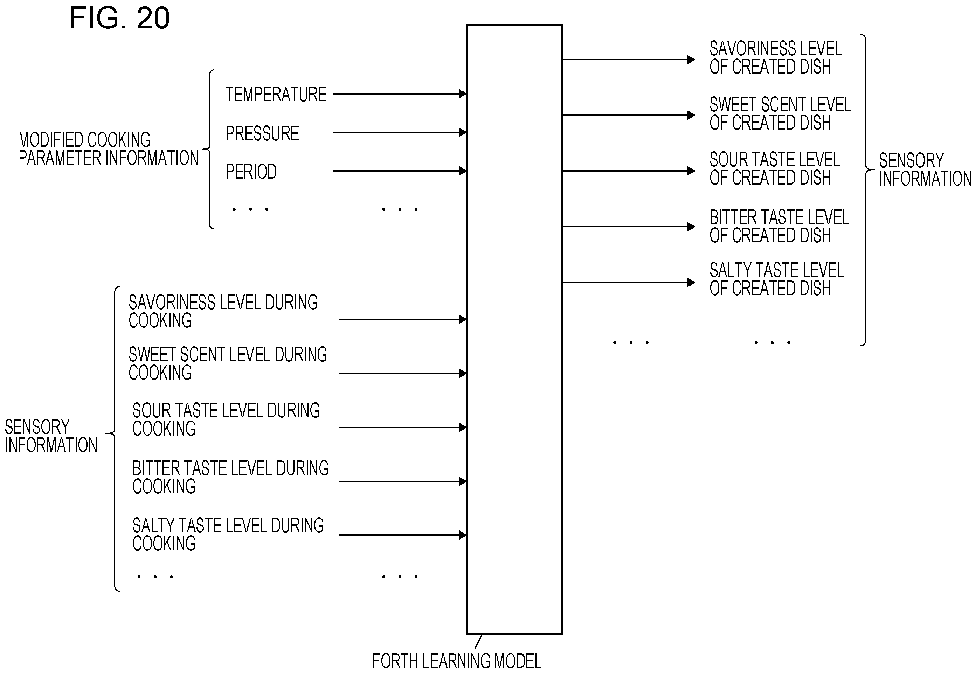

Fig. 20 illustrates an example of the fourth learning model 154. The modified cooking parameter information 142 and the sensory information during cooking are input to the fourth learning model 154. Sensuality information (i.e., the third sensory information 131d) of the created dish is output from the fourth learning model 153. The third sensory information 131d includes a savoriness level, a sweet scent level, a sour taste level, a bitter taste level, and a salty taste level of the created dish.

### (Step S16)

The server 100 transmits a modified cooking parameter concerning a period included in the modified cooking parameter information 142 derived in step S12 and the third sensory information 131d derived in step S15 to the operation terminal 200. Note that the server 100 may transmit all modified cooking parameters included in the modified cooking parameter information 142.

### (Step S17)

The operation terminal 200 receives the modified cooking parameter concerning the period included in the modified cooking parameter information 142 and the third sensory information 131d transmitted in step S16. Then, the operation terminal 200 displays the modified cooking parameter concerning the period and the third sensory information 131d on the display unit 202, as illustrated in Fig. 8(c) or Fig. 9(d). The modified cooking parameter concerning the period is, for example, displayed as a cooking completion period.

As described above, in the present embodiment, dish information indicative of a dish which a cook desires and the target sensory information 131a which the cook desires are acquired, and the initial cooking parameter information 141 is acquired on the basis of these pieces of information. Then, upon transmission of the initial cooking parameter information 141 to the cooker 300, cooking based on the initial cooking parameter information 141 is started by the cooker 300. Then, the initial cooking parameter information 141 used in the cooker 300 is modified on the basis of one or more numerical values (i.e., sensory levels) concerning sensory characteristics of a cooking object during cooking. By cooking based on the modified cooking parameter information 142, a sensory level of a dish to be finally obtained can be brought close to a sensory level indicated by the target sensory information 131a. In other words, the sensory level of the dish to be finally obtained can be brought close to a sensory level which the cook desires. That is, even in a case where the sensory level which the cook desires is different from a sensory level described in a recipe regarded as a base or even in a case where an amount of a cooking object is not identical to that described in the recipe, the final sensory level of the dish can be brought close to the sensory level which the cook desires. As a result, sensory characteristics of the dish can be properly controlled while saving cook's trouble of adjusting a cooking parameter.

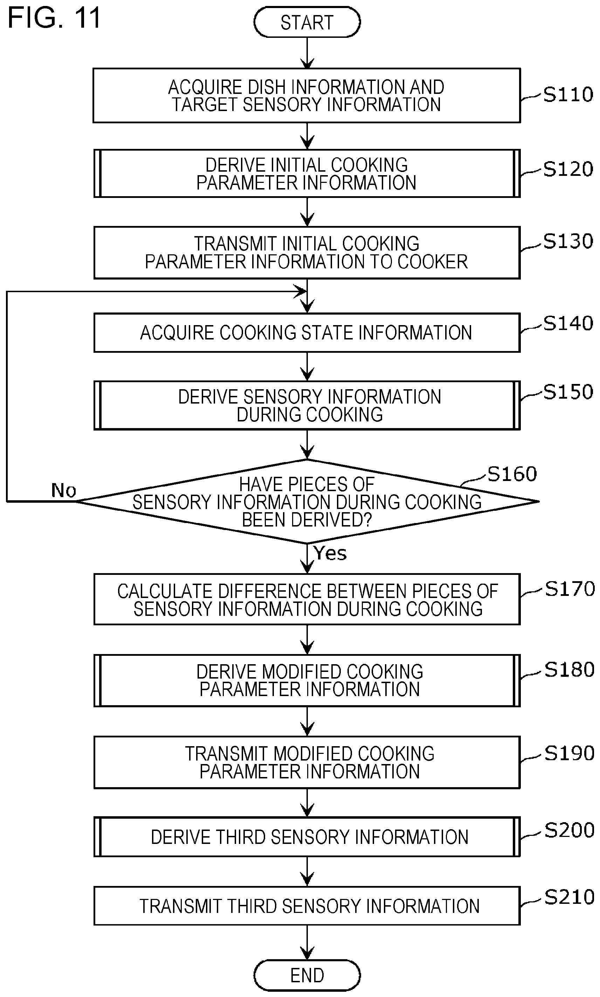

Fig. 11 is a flowchart illustrating an example of processing operation of the server 100.

### (Step S110)

First, the input acquisition unit 1031 of the server 100 acquires the dish information and the target sensory information 131a from the operation terminal 200 via the server communication unit 105.

### (Step S120)

The parameter acquisition unit 1032 derives the initial cooking parameter information 141 by using the dish information and the target sensory information 131a.

### (Step S130)

The parameter output unit 1037 transmits the initial cooking parameter information 141 acquired in step S120 to the cooker 300 via the server communication unit 105.

### (Step S140)

The processing unit 1035 acquires the cooking state information 121 from the cooker 300 via the server communication unit 105 and stores the cooking state information 121 in the second storage unit 120.

### (Step S150)

The sensory information acquisition unit 1033 derives sensory information during cooking by using the cooking state information 121 acquired in step S140.

### (Step S160)

After the process in step S150, the parameter modifying unit 1034 determines whether or not pieces of sensory information during cooking have been derived. That is, the parameter modifying unit 1034 determines whether or not the first sensory information 131b and the second sensory information 131c have been derived. In a case where it is determined in the process in step S160 that pieces of sensory information during cooking have not been derived (No in step S160), the processing unit 1035 and the sensory information acquisition unit 1033 repeatedly performs the processes in step S140 and step S150. That is, the sensory information acquisition unit 1033 acquires the first sensory information 131b and the second sensory information 131c by repeating the process in step S150. Specifically, the sensory information acquisition unit 1033 acquires, as the first sensory information 131b, sensory information during cooking at a time after elapse of the first period from the start of cooking performed by the cooker 300. Furthermore, the sensory information acquisition unit 1033 acquires, as the second sensory information 131c, sensory information during cooking at a time after elapse of the second period from the start of cooking performed by the cooker 300, which is later than the time after elapse of the first period. The time after elapse of the first period corresponds to the time t1 in Fig. 10, and the time after elapse of the second period corresponds to the time t2 in Fig. 10.

### (Step S170)

On the other hand, in a case where it is determined in the process in step S160 that pieces of sensory information during cooking have been derived (Yes in step S160), the parameter modifying unit 1034 calculates a difference between these pieces of sensory information during cooking. That is, the parameter modifying unit 1034 calculates a difference between the first sensory information 131b and the second sensory information 131c.

### (Step S180)

Then, the parameter modifying unit 1034 derives the modified cooking parameter information 142 by using the target sensory information 131a acquired in step S110 and the difference calculated in step S170. Note that the modified cooking parameter information 142 is information for bringing one or more numerical values concerning sensory characteristics of a dish to be finally obtained to one or more numerical values indicated by the target sensory information 131a. As described above, the parameter modifying unit 1034 according to the present embodiment changes the initial cooking parameter information 141 to the modified cooking parameter information 142 on the basis of the difference between the first sensory information 131b and the second sensory information 131c and the target sensory information 131a.

As described above, in the present embodiment, the initial cooking parameter information 141 is modified to the modified cooking parameter information 142 on the basis of a change amount of the sensory information during cooking and the target sensory information 131a. Therefore, the sensory level of the dish to be finally obtained can be effectively brought close to the sensory level which the cook desires by taking into consideration tendency of change of the sensory level caused by cooking based on the initial cooking parameter information 141.

### (Step S190)

The parameter output unit 1037 transmits the modified cooking parameter information 142 derived in step S180 to the operation terminal 200 and the cooker 300 via the server communication unit 105. The parameter output unit 1037 may transmit only a modified cooking parameter concerning a period included in the modified cooking parameter information 142 to the operation terminal 200.

### (Step S200)

The sensory information acquisition unit 1033 derives the third sensory information 131d by using the modified cooking parameter information 142 derived in step S180. That is, the sensory information acquisition unit 1033 acquires the third sensory information 131d indicative of one or more numerical values concerning sensory characteristics of a dish to be obtained by cooking based on the modified cooking parameter information 142 performed by the cooker 300 on the basis of the modified cooking parameter information 142.

### (Step S210)

The parameter output unit 1037 transmits the third sensory information 131d derived in step S200 to the operation terminal 200 via the server communication unit 105. The third sensory information 131d is displayed on the display unit 202 of the operation terminal 200.

As described above, in the present embodiment, information indicative of a sensory level of a dish to be finally obtained is estimated as the third sensory information 131d. Then, the third sensory information 131d is presented to the cook. As a result, the cook can check whether or not a dish having a sensory level which the cook desires is made or how close the sensory level of the dish to be finally obtained is to cook's desire.

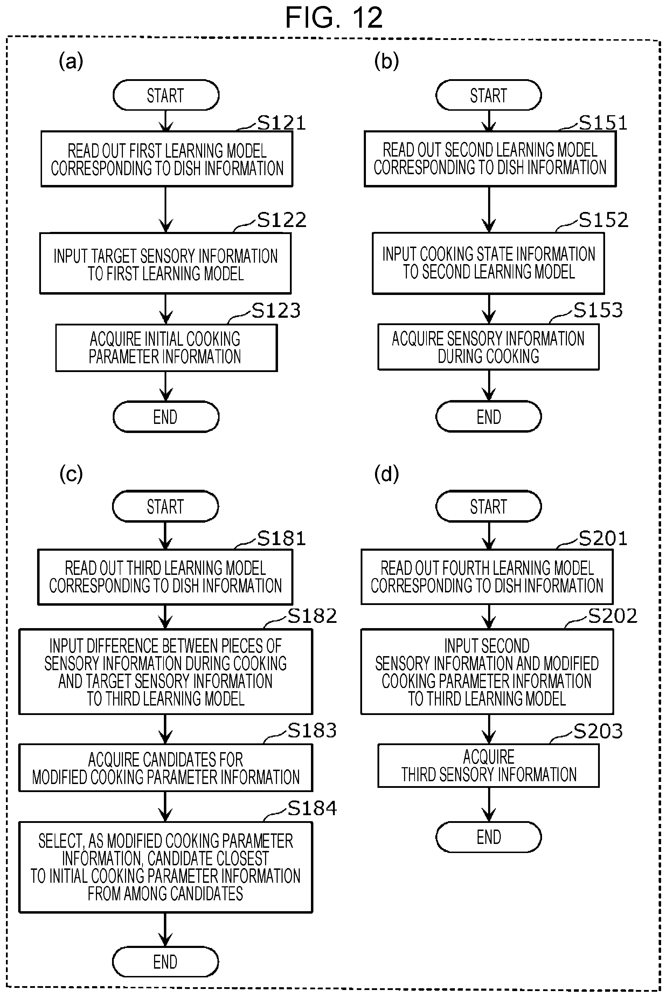

Fig. 12 is a flowchart illustrating details of part of the processing operation of the server 100. Specifically, Fig. 12(a) is a flowchart illustrating detailed processing in step S120 of Fig. 11, and Fig. 12(b) is a flowchart illustrating detailed processing in step S150 of Fig. 11. Fig. 12(c) is a flowchart illustrating detailed processing in step S180 of Fig. 11, and Fig. 12(d) is a flowchart illustrating detailed processing in step S200 of Fig. 11.

The parameter acquisition unit 1032 performs, for example, processes in steps S121 to S123 illustrated in Fig. 12(a) when deriving the initial cooking parameter information 141.

### (Step S121)

The parameter acquisition unit 1032 reads out the first learning model 151 corresponding to the dish information from the model storage unit 150. That is, the parameter acquisition unit 1032 reads out the first learning model 151 included in the learning model set 150a corresponding to the dish name indicated by the dish information from the model storage unit 150.

### (Step S122)

The parameter acquisition unit 1032 inputs the target sensory information 131a to the first learning model 151 read out in step S121.

### (Step S123)

The parameter acquisition unit 1032 acquires the initial cooking parameter information 141 output from the first learning model 151 in response to the input in step S122. The initial cooking parameter information 141 is thus derived.

The sensory information acquisition unit 1033 performs, for example, processes in step S151 to S153 illustrated in Fig. 12(b) when deriving the sensory information during cooking such as the first sensory information 131b.

### (Step S151)

The sensory information acquisition unit 1033 reads out the second learning model 152 corresponding to the dish information from the model storage unit 150. That is, the sensory information acquisition unit 1033 reads out the second learning model 152 included in the learning model set 150a corresponding to the dish name indicated by the dish information from the model storage unit 150.

### (Step S152)

The sensory information acquisition unit 1033 inputs the latest cooking state information 121 to the second learning model 152 thus read out.

### (Step S153)

The sensory information acquisition unit 1033 acquires, as sensory information during cooking, the sensory information 131 output from the second learning model 152 in response to the input in step S152. The sensory information during cooking is thus derived.

In this way, the sensory information acquisition unit 1033 according to the present embodiment acquires the sensory information during cooking by inputting an image of the cooking object, a weight of the cooking object, and an amount of a chemical component contained in the cooking object during cooking performed by the cooker 300 to the second learning model 152. Since the second learning model 152 is used to acquire the sensory information during cooking, accurate sensory information during cooking can be acquired.

Note that the image of the cooking object, the weight of the cooking object, and the amount of the chemical component contained in the cooking object are included in the cooking state information 121 as the image data 121a, the weight data 121c, and the chemical analysis data 121b. Although the image data 121a, the weight data 121c, and the chemical analysis data 121b are input to the second learning model 152 in the present embodiment, only one of the image data 121a, the chemical analysis data 121b, and the weight data 121c or only two of the image data 121a, the chemical analysis data 121b, and the weight data 121c may be input to the second learning model 152. That is, at least one of the image data 121a, the weight data 121c, and the chemical analysis data 121b may be input to the second learning model 152. Even in such a case, accurate sensory information during cooking can be acquired.

The parameter modifying unit 1034 performs, for example, processes in steps S181 to S184 illustrated in Fig. 12(c) when deriving the modified cooking parameter information 142.

### (Step S181)

The parameter modifying unit 1034 reads out the third learning model 153 corresponding to the dish information from the model storage unit 150. That is, the parameter modifying unit 1034 reads out the third learning model 153 included in the learning model set 150a corresponding to the dish name indicated by the dish information from the model storage unit 150.

### (Step S182)

The parameter modifying unit 1034 inputs a difference between pieces of sensory information during cooking and the target sensory information 131a to the third learning model 153 thus read out.

### (Step S183)

The parameter modifying unit 1034 acquires candidates output from the third learning model 153 in response to the input in step S182. Each of the candidates is a candidate for the modified cooking parameter information 142.

### (Step S184)

The parameter modifying unit 1034 selects, as the modified cooking parameter information 142, a candidate closest to the initial cooking parameter information 141 from among the candidates acquired in step S183. The modified cooking parameter information 142 is thus derived.

As described above, the parameter modifying unit 1034 according to the present embodiment acquires candidates for the modified cooking parameter information 142 on the basis of the target sensory information 131a and the sensory information during cooking. Then, the parameter modifying unit 1034 selects, as the modified cooking parameter information 142, a candidate closest to the initial cooking parameter information 141 from among the candidates. Alternatively, the parameter modifying unit 1034 may select, as the modified cooking parameter information 142, a candidate whose difference from the initial cooking parameter information 141 is less than or equal to a threshold value from among the candidates. For example, each of the candidates is expressed as a vector including a cooking parameter concerning a pressure, a cooking parameter concerning a temperature, and a cooking parameter concerning a period. Similarly, the initial cooking parameter information 141 is also expressed as a vector including a cooking parameter concerning a pressure, a cooking parameter concerning a temperature, and a cooking parameter concerning a period. Accordingly, the parameter modifying unit 1034 may calculate a distance between the vector of each of the candidates and the vector of the initial cooking parameter information 141 and select, as the modified cooking parameter information 142, a candidate whose distance is less than or equal to a threshold value or smallest from among the candidates. For example, a candidate whose predetermined one or two cooking parameters are identical to that or those of the initial cooking parameter information 141 and whose remaining only two or one cooking parameter is different from those or that of the initial cooking parameter information 141 among the candidates may be selected as the modified cooking parameter information 142. The predetermined one or two cooking parameters may be a cooking parameter concerning a temperature, a cooking parameter concerning a pressure, or the like.

In this way, even in a case where candidates are output from the third learning model 153, a candidate that is not markedly different from the initial cooking parameter information 141 is employed as the modified cooking parameter information 142. It is therefore possible to lessen a processing burden of the cooker 300 caused by the modification of the initial cooking parameter information 141. Furthermore, it is possible to prevent taste of a dish from being markedly changed.

The sensory information acquisition unit 1033 performs, for example, processes in steps S201 to S203 illustrated in Fig. 12(d) when deriving the third sensory information 131d.

### (Step S201)

The sensory information acquisition unit 1033 reads out the fourth learning model 154 corresponding to the dish information from the model storage unit 150. That is, the sensory information acquisition unit 1033 reads out the fourth learning model 154 included in the learning model set 150a corresponding to the dish name indicated by the dish information from the model storage unit 150.

### (Step S202)

The sensory information acquisition unit 1033 inputs the second sensory information 131c and the modified cooking parameter information 142 to the fourth learning model 154 thus read out.

### (Step S203)

The sensory information acquisition unit 1033 acquires, as the third sensory information 131d, the sensory information 131 output from the fourth learning model 154 in response to the input in step S202. The third sensory information 131d is thus derived.

In this way, the sensory information acquisition unit 1033 according to the present embodiment acquires the third sensory information 131d by inputting at least the modified cooking parameter information 142 to the fourth learning model 154.

### Example of Construction of Learning Model

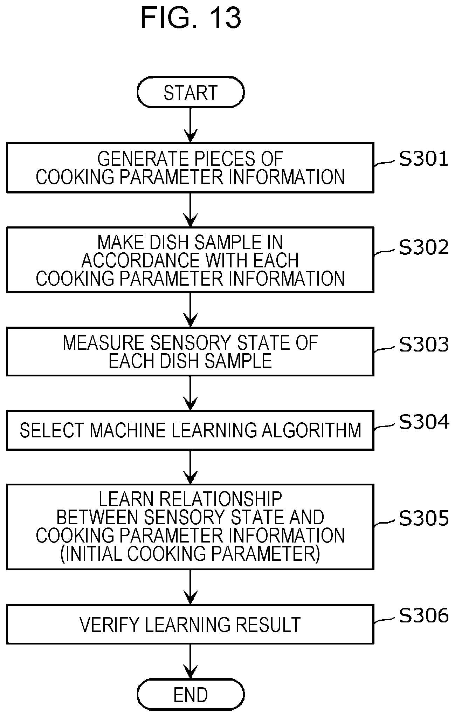

Fig. 13 is a flowchart illustrating an example of construction of the first learning model 151.

### (Step S301)

First, a model creator generates pieces of cooking parameter information for a predetermined dish. Note that the cooking parameter information indicates one or more cooking parameters used by the cooking unit 320 of the cooker 300.

### (Step S302)

Next, the model creator makes, for each of the pieces of cooking parameter information, a sample of a dish (also called a dish sample) by performing cooking based on the cooking parameter information by the cooker 300. The cooker 300 cooks one or more ingredients indicated by recipe information corresponding to the predetermined dish.

### (Step S303)

The model creator evaluates, for each dish sample made in step S302, a sensory state of the dish sample. The sensory state includes one or more sensory levels of the dish sample. The sensory level may be evaluated by persons. For example, each of the persons eats a dish sample and evaluates a sensory level of the dish sample. An average of sensory levels obtained by the evaluation performed by the persons may be used as a final sensory level of the dish sample.

### (Step S304)

The model creator selects a machine learning algorithm for constructing the first learning model 151 for the predetermined dish.

### (Step S305)

The model creator causes a learning model to learn a relationship between a sensory state corresponding to the predetermined dish and cooking parameter information in accordance with the machine learning algorithm selected in step S304.

### (Step S306)

The model creator verifies the learning model that has been trained in the process in step S305. That is, the model creator verifies whether or not correct cooking parameter information is output as the initial cooking parameter information 141 from the learning model in response to input of sensory information indicative of a sensory state to the learning model. The learning model that has been verified to output correct cooking parameter information is stored in the model storage unit 150 of the server 100 as the first learning model 151 corresponding to the predetermined dish. Note that the correct cooking parameter information is information based on which a dish of a sensory state input to the learning model is actually made.

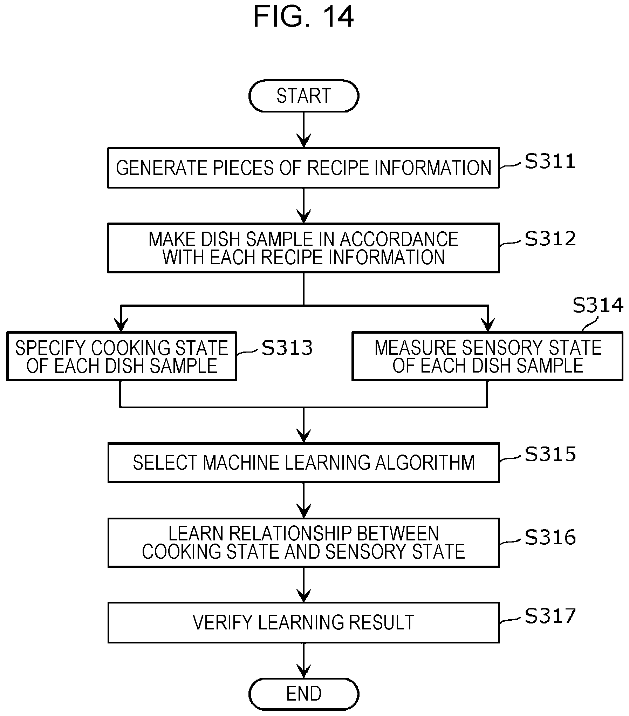

Fig. 14 is a flowchart illustrating an example of construction of the second learning model 152.

### (Step S311)

First, the model creator generates pieces of recipe information for a predetermined dish. Note that the recipe information indicates one or more ingredients used for the predetermined dish and an amount of each of the one or more ingredients.

### (Step S312)

Next, the model creator makes, for each of the pieces of recipe information, a dish sample by performing cooking based on the recipe information by the cooker 300. Note that the dish sample may be a sample at the time after elapse of the first period from the start of cooking or at the time after elapse of the second period from the start of cooking.

### (Step S313)

The model creator specifies, for each dish sample made in step S312, a cooking state of the dish sample. That is, the model creator acquires image data by imaging the dish sample by using a camera, acquires chemical analysis data by analyzing the dish sample by using a chemical analyzer, and acquires weight data of the dish sample by using a weight scale. The image data, the chemical analysis data, and the weight data are thus specified as the cooking state of the dish sample.

### (Step S314)

The model creator measures, for each dish sample made in step S312, a sensory state of the dish sample, that is, one or more sensory levels of the dish sample.

### (Step S315)

The model creator selects a machine learning algorithm for constructing the second learning model 152 for the predetermined dish.

### (Step S316)

The model creator causes a learning model to learn a relationship between a cooking state and a sensory state in accordance with the machine learning algorithm selected in step S315.

### (Step S317)

The model creator verifies the learning model that has been trained in the process in step S316. That is, the model creator verifies whether or not sensory information indicative of a correct sensory state is output from the learning model in response to the input of the cooking state to the learning model. The learning model that has been verified to output sensory information indicative of a correct sensory state is stored in the model storage unit 150 of the server 100 as the second learning model 152 corresponding to the predetermined dish. Note that the correct sensory state is an actual sensory state of a dish sample of a cooking state input to the learning model.

As described above, the second learning model 152 according to the present embodiment is trained by machine learning to output one or more numerical values concerning sensory characteristics of one or more ingredients cooked by the cooker 300 in response to input of an image of the one or more ingredients, a weight of the one or more ingredients, and an amount of a chemical component contained in the one or more ingredients. Note that the one or more numerical values concerning sensory characteristics of the one or more ingredients correspond to the above sensory state or the sensory information 131. The image, weight, and amount of the chemical component of the one or more ingredients correspond to the image data 121a, the weight data 121c, and the chemical analysis data 121b, respectively, and the cooking state of the dish sample is expressed by these pieces of data. Although the image, the weight, and the amount of the chemical component are input to the learning model in the machine learning according to the present embodiment, only one of the image, the weight, and the amount of the chemical component or only two of the image, the weight, and the amount of the chemical component may be input to the learning model. That is, the second learning model 152 may be trained by machine learning to output sensory information indicative of a sensory state of one or more ingredients in response to input of at least one of an image, a weight, and an amount of a chemical component of the one or more ingredients.

In this way, when at least one of the image data 121a, the weight data 121c, and the chemical analysis data 121b of the cooking object is input to the second learning model 152 by the sensory information acquisition unit 1033, accurate sensory information during cooking can be acquired from the second learning model 152.

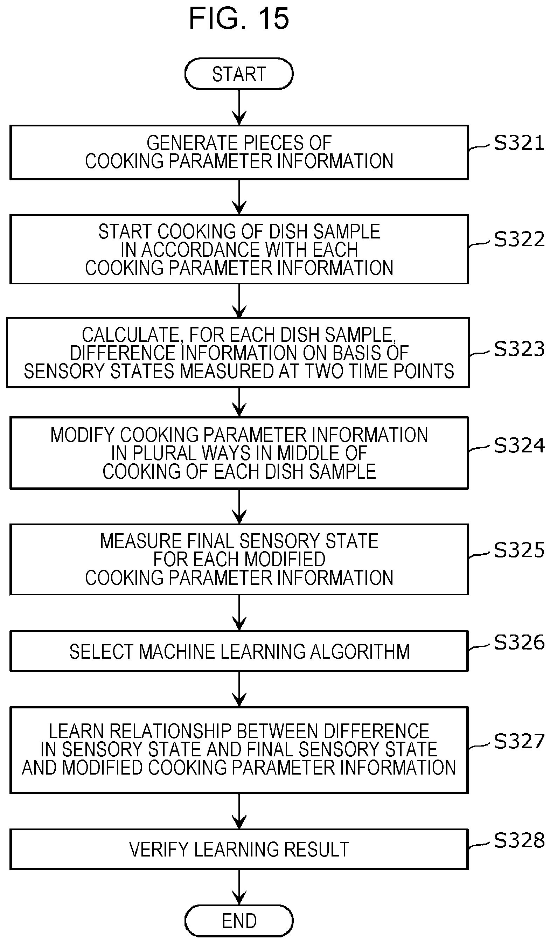

Fig. 15 is a flowchart illustrating an example of construction of the third learning model 153.

### (Step S321)

First, the model creator generates pieces of cooking parameter information for a predetermined dish.

### (Step S322)

Next, the model creator starts, for each of the pieces of cooking parameter information, cooking of a dish sample by the cooker 300 in accordance with the cooking parameter information.

### (Step S323)

After the start of cooking in step S322, the model creator measures, for each dish sample, a sensory state of the dish sample at two time points. Then, the model creator calculates difference information on the basis of sensory states measured at the two time points. Note that the two time points are time points during cooking performed by the cooker 300. That is, the measured sensory states are sensory states during cooking. The two time points may be the time after elapse of the first period and the time after elapse of the second period.

### (Step S324)

Then, the model creator modifies the cooking parameter information in plural ways during cooking. That is, the model creator stops cooking based on the cooking parameter information before the modification and starts cooking based on the cooking parameter information after the modification.

### (Step S325)

The model creator measures, for each dish sample made in accordance with the cooking parameter information after the modification, a sensory state of the dish sample, that is, one or more sensory levels of the dish sample. The sensory state thus measured is a final sensory state after cooking.

### (Step S326)

The model creator selects a machine learning algorithm for constructing the third learning model 153 for the predetermined dish.

### (Step S327)

The model creator causes a learning model to learn a relationship between the difference in sensory state during cooking calculated in step S323 and the final sensory state measured in step S325 and the cooking parameter information after the modification in accordance with the machine learning algorithm selected in step S326.

### (Step S328)

The model creator verifies the learning model that has been trained in the process in step S327. That is, the model creator verifies whether or not correct cooking parameter information after modification is output from the learning model as the modified cooking parameter information 142 in response to input of a difference in sensory state during cooking and sensory information indicative of a final sensory state to the learning model. The learning model that has been verified to output correct cooking parameter information after modification is stored in the model storage unit 150 of the server 100 as the third learning model 153. Note that the final sensory state corresponds to the target sensory information 131a. The correct cooking parameter information after modification is information that is actually needed to make a dish of a final sensory state input to the learning model in a case where a sensory state changes as indicated by a difference in sensory state input to the learning model. By the learning model thus constructed, that is, by the third learning model 153, the modified cooking parameter information 142 that brings a sensory state during cooking close to the target sensory information 131a can be acquired.

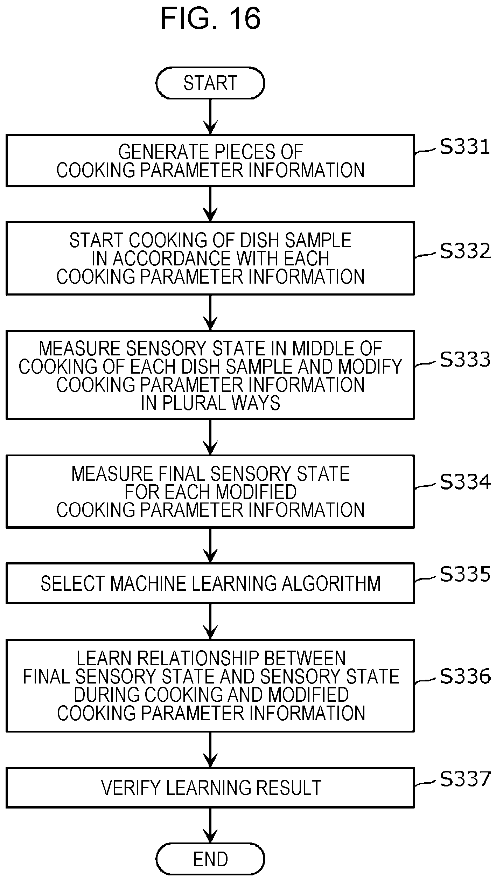

Fig. 16 is a flowchart illustrating an example of construction of the fourth learning model 154.

### (Step S331)

First, the model creator generates pieces of cooking parameter information for a predetermined dish.

### (Step S332)

Next, the model creator starts, for each of the pieces of cooking parameter information, cooking of a dish sample by the cooker 300 in accordance with the cooking parameter information.

### (Step S333)

Then, after the start of cooking in step S332, the model creator measures, for each dish sample, a sensory state of the dish sample. The sensory state thus measured is a sensory state during cooking. Furthermore, the model creator modifies the cooking parameter information in plural ways during cooking. That is, the model creator stops cooking based on the cooking parameter information before the modification and starts cooking based on the cooking parameter information after the modification. Note that the process in step S333 may be performed at a time after elapse of the second period from the start of cooking. The process in step S333 may start at the time after elapse of the second period from the start of cooking.

### (Step S334)

The model creator measures, for each dish sample made on the basis of the cooking parameter information after the modification, a sensory state of the dish sample, that is, one or more sensory levels of the dish sample. The sensory state thus measured is a final sensory state after cooking.

### (Step S335)

The model creator selects a machine learning algorithm for constructing the fourth learning model 154 for the predetermined dish.

### (Step S336)

The model creator causes a learning model to learn a relationship between the final sensory state measured in step S334 and the sensory state during cooking measured in step S333 and the cooking parameter information after the modification in accordance with the machine learning algorithm selected in step S335.

### (Step S337)

The model creator verifies the learning model that has been trained in the process in step S336. That is, the model creator verifies whether or not a correct final sensory state is output from the learning model as the third sensory information 131d in response to input of sensory information indicative of a sensory state during cooking and the cooking parameter information after the modification to the learning model. The learning model that has been verified to output sensory information indicative of a correct final sensory state is stored in the model storage unit 150 of the server 100 as the fourth learning model 154.

As described above, the fourth learning model 154 according to the present embodiment is trained by machine learning to output one or more numerical values concerning sensory characteristics of a dish to be obtained by cooking based on one or more cooking parameters changed during cooking performed by the cooker 300 in response to input of at least the changed one or more cooking parameters. Note that the modified one or more cooking parameters correspond to the modified cooking parameter information 142, and the one or more numerical values concerning sensory characteristics of a dish is information indicative of a final sensory state of the dish and correspond to the third sensory information 131d. Note that the correct final sensory state is an actual sensory state of a final dish sample obtained by cooking a dish sample of a sensory state during cooking input to the learning model in accordance with cooking parameter information after the modification input to the learning model.

Since the fourth learning model 154 thus trained by machine learning is used to acquire the third sensory information 131d, accurate third sensory information 131d can be acquired.

As described above, in the information processing system 1000 according to the present embodiment, sensory characteristics of a dish can be properly controlled without cook's trouble of adjusting a cooking parameter. Furthermore, the cook can properly grasp sensory characteristics of a dish to be obtained by cooking. That is, the cook can check whether or not a dish having a sensory level which the cook desires is made or how close a sensory level of a dish to be finally obtained is to cook's desire.

### <Other Aspects>

The information processing system, server, operation terminal, and others according to the present disclosure have been described above on the basis of the embodiment, the present disclosure is not limited to this embodiment. Various modifications of the embodiment which a person skilled in the art can think of are also encompassed within the scope of the present disclosure without departing from the spirit of the present disclosure.

For example, although the operation terminal 200 according to the embodiment is a device independent of the cooker 300, the operation terminal 200 may be incorporated into the cooker 300. That is, a function used in the information processing system 1000 among the various functions of the operation terminal 200 may be included in the cooker 300. The operation terminal 200 may be configured as a personal computer.

The cook according to the above embodiment may be a user using the information processing system 1000 or may be an operator of the operation terminal 200 or the cooker 300.

Although the server 100 according to the above embodiment includes the first storage unit 110, the second storage unit 120, the third storage unit 130, the fourth storage unit 140, and the model storage unit 150, the server 100 need not necessarily include these recording media. For example, the server 100 may use these recording media by communicating with a device that is located outside the server 100 and has these recording media.

The server 100 according to the above embodiment acquires cooking parameter information including one or more cooking parameters used for cooking performed by the cooker 300 on the basis of the dish information and the target sensory information 131a. That is, the server 100 acquires the initial cooking parameter information 141. However, the server 100 need not necessarily acquire the initial cooking parameter information 141. In this case, the server 100 acquires sensory information during cooking of a cooking object during cooking of the cooking object performed in accordance with the basic cooking parameter information 113 by the cooker 300. Alternatively, the server 100 may acquire the initial cooking parameter information 141 generated by the cooker 300.

In other words, the control method according to the present disclosure is a control method performed by a computer to control a cooker that cooks a cooking object and may perform the following processing operation. Specifically, the control method includes acquiring dish information indicative of a dish to be obtained by cooking of the cooking object, acquiring cooking parameter information including one or more cooking parameters used for cooking performed by the cooker on the basis of the acquired dish information, and acquiring target sensory information indicative of a target of one or more numerical values concerning sensory characteristics. Furthermore, the control method includes acquiring sensory information during cooking indicative of one or more numerical values concerning the sensory characteristics of the cooking object during cooking of the cooking object performed in accordance with the cooking parameter information by the cooker, changing the cooking parameter information into modified cooking parameter information including one or more modified cooking parameters on the basis of the target sensory information and the sensory information during cooking, and outputting a control signal including the modified cooking parameter information. Note that the cooking parameter information is the basic cooking parameter information 113 or the initial cooking parameter information 141 and may be acquired from the cooker 300. The control signal may be output or transmitted to the cooker 300. Even such a control method can produce effects similar to those produced by the control method according to the above embodiment.

In the above embodiment, each constituent element may be realized by dedicated hardware or may be realized by execution of a software program suitable for the constituent element. Each constituent element may be realized by a program execution unit such as a CPU or a processor reading out and executing a software program recorded in a recording medium such as a hard disk or a semiconductor memory. A program that realizes a system such as the server 100 or the operation terminal 200 according to the above embodiment may cause a processor to execute, for example, the steps included in the sequence diagram of Fig. 10. Furthermore, the program that realizes the server 100 according to the above embodiment may cause the processor to execute the steps included in the flowcharts of Figs. 11 and 12.

### (Hardware Configuration)

The server 100 or the operation terminal 200 may be specifically a computer system including a microprocessor, a ROM, a RAM, a hard disk drive, a display unit, a keyboard, and a mouse. A program is stored in the RAM or the hard disk drive. The microprocessor operates in accordance with the program, and thereby the server 100 or the operation terminal 200 accomplishes the functions thereof. The program is a combination of command codes indicative of a command for a computer to accomplish a predetermined function.

Furthermore, part or all of the constituent elements constituting the server 100 or the operation terminal 200 may be a single system large scale integration (LSI). The system LSI is a super multifunctional LSI produced by integrating constituent parts on a single chip and is specifically a computer system including a microprocessor, a ROM, and a RAM. A computer program is stored in the RAM. The microprocessor operates in accordance with the computer program, and thereby the system LSI accomplishes a function thereof.

Furthermore, part or all of the constituent elements constituting the server 100 or the operation terminal 200 may be an IC card attachable and detachable to and from a computer or a stand-alone module. The IC card or the module is a computer system including a microprocessor, a ROM, and a RAM. The IC card or the module may include the super multifunctional LSI. The microprocessor operates in accordance with a computer program, and thereby the IC card or the module accomplishes a function thereof. The IC card or the module may have tamper resistance.

The present disclosure may be a control method or an information providing method performed by the server 100 or the operation terminal 200. These methods may be realized by executing a program by a computer or may be realized by a digital signal including the program.

The present disclosure may be a computer-readable non-transitory recording medium recording the program or the digital signal. Examples of the recording medium include a flexible disc, a hard disk, a CD-ROM, an MO, a DVD, a DVD-ROM, a DVD-RAM, a BD (Blu-ray (Registered Trademark) Disc), and a semiconductor memory. The program may be the digital signal recorded on the non-transistor recording medium.

The present disclosure may be the program or the digital signal transmitted over an electric communication line, a wireless or wired communication line, a network represented by the Internet, data broadcasting, or the like.

The present disclosure may be a computer system including a microprocessor and a memory, and the memory may store the computer program therein, and the microprocessor may operate in accordance with the program.

The program or the digital signal may be executed by another independent computer system by transporting the program or the digital signal on the non-transitory recording medium or transporting the program or the digital signal over the network or the like.

### (Other Remarks)

A modification of the embodiment of the present disclosure may be as follows.

A method performed by a computer, including:
(a) deciding information including a first temperature on the basis of information including a first sour taste level designated by a user and information indicative of one or more ingredients, a cooker starting cooking of the one or more ingredients at a first time under a first condition to make a dish having the first sour taste level, the first condition including cooking the one or more ingredients at the first temperature,
(b) deciding a second sour taste level of the one or more ingredients cooked under the first condition from the first time to a second time on the basis of a first image of the one or more ingredients cooked under the first condition from the first time to the second time, the first image being taken by a camera at the second time,
(c) deciding a third sour taste level of the one or more ingredients cooked under the first condition from the first time to a third time on the basis of a second image of the one or more ingredients cooked under the first condition from the first time to the third time, the second image being taken by a camera at the third time, and
(d) deciding information including a second temperature on the basis of the first sour taste level, the second sour taste level, and the third sour taste level, the cooker cooking, from a fifth time under a second condition, the one or more ingredients cooked from the first time to a fourth time to make the dish having the first sour taste level,

the second condition including cooking, at the second temperature, the one or more ingredients cooked from the first time to the fourth time, the fifth time being later than the fourth time or identical to the fourth time,
the fourth time being later than the second time and the third time, and
the second time and the third time being later than the first time.

(a) in the above description is supported, for example, by the first learning model and related description thereof.
(b) and (c) in the above description are supported, for example, by the second learning model and related description thereof. (d) in the above description is supported, for example, by the third learning model and related description thereof.

### Industrial Applicability

The present disclosure produces an effect that a sensory level of a dish can be properly controlled, and is useful for a system, a device, or the like that performs control concerning cooking or provides information.

### Reference Signs List

100 server
103 server control unit
104 server storage unit
105 server communication unit
110 first storage unit
111 dish list information
112 recipe information
113 basic cooking parameter information
114 basic sensory information
120 second storage unit
121 cooking state information
121a image data
121b chemical analysis data
121c weight data
130 third storage unit
131 sensory information
131a target sensory information
131b first sensory information
131c second sensory information
131d third sensory information
140 fourth storage unit
141 initial cooking parameter information
142 modified cooking parameter information
150 model storage unit
150a learning model set
151 first learning model
152 second learning model
153 third learning model
154 fourth learning model
200 operation terminal
201 input unit
202 display unit
203 terminal control unit
204 terminal storage unit
205 terminal communication unit
300 cooker
303 cooking control unit
304 cooking storage unit
305 cooking communication unit
310 cooking state acquisition unit
311 weight measuring unit
312 imaging unit
313 chemical analysis unit
320 cooking unit
321 pressure adjusting unit
322 temperature adjusting unit
323 period adjusting unit
1000 information processing system
1031 input acquisition unit
1032 parameter acquisition unit
1033 sensory information acquisition unit
1034 parameter modifying unit
1035 processing unit
1037 parameter output unit

## Claims

1. A control method performed by a computer to control a cooker that cooks a cooking object, the control method comprising:
acquiring target sensory information indicative of a target of one or more numerical values concerning sensory characteristics of a dish to be obtained by cooking of the cooking object;
acquiring cooking parameter information including one or more cooking parameters used for the cooking performed by the cooker on a basis of the acquired target sensory information;
acquiring sensory information during cooking indicative of one or more numerical values concerning the sensory characteristics of the cooking object during the cooking performed by the cooker;
changing the cooking parameter information to modified cooking parameter information including one or more modified cooking parameters on a basis of the target sensory information and the sensory information during cooking; and
outputting a control signal including the modified cooking parameter information.

2. The control method according to claim 1, wherein
the acquiring the sensory information during cooking includes acquiring, as first sensory information, the sensory information during cooking at a time after elapse of a first period from start of the cooking performed by the cooker and acquiring, as second sensory information, the sensory information during cooking at a time after elapse of a second period from the start of the cooking performed by the cooker, the time after elapse of the second period being later than the time after elapse of the first period, and
the changing the cooking parameter information includes changing the cooking parameter information to the modified cooking parameter information on a basis of a difference between the first sensory information and the second sensory information and the target sensory information.

3. The control method according to claim 1, further comprising acquiring third sensory information indicative of one or more numerical values concerning the sensory characteristics of the dish to be obtained by cooking performed in accordance with the modified cooking parameter information by the cooker.

4. The control method according to claim 1, wherein
the changing the cooking parameter information includes:
acquiring candidates for the modified cooking parameter information on a basis of the target sensory information and the sensory information during cooking and
selecting, as the modified cooking parameter information, a candidate whose difference from the cooking parameter information is less than or equal to a threshold value or a candidate closest to the cooking parameter information from among the candidates.

5. The control method according to claim 3, wherein
the acquiring the third sensory information includes acquiring the third sensory information by inputting at least the modified cooking parameter information to a learning model, and
the learning model has been trained by machine learning to output one or more numerical values concerning the sensory characteristics of the dish to be obtained by cooking performed by the cooker in accordance with one or more cooking parameters changed during cooking performed by the cooker in response to input of at least the changed one or more cooking parameters.

6. The control method according to claim 1, wherein
the acquiring the sensory information during cooking includes acquiring the sensory information during cooking by inputting, to a learning model, at least one of an image of the cooking object, a weight of the cooking object, and an amount of a chemical component contained in the cooking object during the cooking performed by the cooker.

7. The control method according to claim 6, wherein
the learning model has been trained by machine learning to output one or more numerical values concerning the sensory characteristics of one or more cooking ingredients that are being cooked by the cooker in response to input of at least one of an image of the one or more cooking ingredients, a weight of the one or more cooking ingredients, and an amount of a chemical component contained in the one or more cooking ingredients.

8. The control method according to any one of claims 1 to 7, wherein
the one or more cooking parameters include a parameter indicative of a temperature used for the cooking performed by the cooker and a parameter indicative of a period used for the cooking performed by the cooker.

9. The control method according to claim 8, wherein
the one or more cooking parameters further include a parameter indicative of a pressure used for the cooking performed by the cooker.

10. An information providing method for causing a computer to provide information concerning cooking of a cooking object performed by a cooker, the information providing method comprising:
receiving target sensory information indicative of a target of one or more numerical values concerning sensory characteristics of a dish to be obtained by the cooking of the cooking object in response to user's operation; and
outputting final sensory information concerning the sensory characteristics of the dish, which is derived on a basis of the target sensory information and sensory information during cooking indicative of one or more numerical values concerning the sensory characteristics of the cooking object during the cooking of the cooking object performed by the cooker.

11. A control system that controls a cooker that cooks a cooking object, comprising:
an input acquisition unit that acquires target sensory information indicative of a target of one or more numerical values concerning sensory characteristics of a dish to be obtained by cooking of the cooking object;
a parameter acquisition unit that acquires cooking parameter information including one or more cooking parameters used for the cooking performed by the cooker on a basis of the acquired target sensory information;
a sensory information acquisition unit that acquires sensory information during cooking indicative of one or more numerical values concerning the sensory characteristics of the cooking object during the cooking performed by the cooker;
a parameter modifying unit that modifies the cooking parameter information to modified cooking parameter information including one or more modified cooking parameters on a basis of the target sensory information and the sensory information during cooking; and
a parameter output unit that output a control signal including the modified cooking parameter information to the cooker.

12. An information providing system that provides information concerning cooking of a cooking object performed by a cooker, comprising:
an input unit that receives target sensory information indicative of a target of one or more numerical values concerning sensory characteristics of a dish to be obtained by cooking of the cooking object in response to user's operation; and
an output unit that outputs final sensory information concerning the sensory characteristics of the dish, which is derived on a basis of the target sensory information and sensory information during cooking indicative of one or more numerical values concerning the sensory characteristics of the cooking object during the cooking of the cooking object performed by the cooker.

13. A program for controlling a cooker that cooks a cooking object, the program causing a computer to perform a process comprising:
acquiring target sensory information indicative of a target of one or more numerical values concerning sensory characteristics of a dish to be obtained by cooking of the cooking object;
acquiring cooking parameter information including one or more cooking parameters used for the cooking performed by the cooker on a basis of the acquired target sensory information;
acquiring sensory information during cooking indicative of one or more numerical values concerning the sensory characteristics of the cooking object during the cooking performed by the cooker;
changing the cooking parameter information to modified cooking parameter information including one or more modified cooking parameters on a basis of the target sensory information and the sensory information during cooking; and
outputting a control signal including the modified cooking parameter information.

14. A program for providing information concerning cooking of a cooking object performed by a cooker, the program causing a computer to perform a process comprising:
receiving target sensory information indicative of a target of one or more numerical values concerning sensory characteristics of a dish to be obtained by cooking of the cooking object in response to user's operation; and
outputting final sensory information concerning the sensory characteristics of the dish, which is derived on a basis of the target sensory information and sensory information during cooking indicative of one or more numerical values concerning the sensory characteristics of the cooking object during the cooking of the cooking object performed by the cooker.
